# EUROPEAN PATENT SPECIFICATION

(11) **EP 3 182 780 B1**
(45) Date of publication and mention of the grant of the patent: **09.10.2019**
(21) Application number: 15841284.1
(22) Date of filing: 06.05.2015
(51) Int. Cl.: H04W 72/04, H04W 76/14, G08G 1/00, H04W 72/14

(54) **VDC RESOURCE REQUEST METHOD, USER EQUIPMENT, BASE STATION, AND COMPUTER-READABLE STORAGE MEDIUM**
VDC-RESSOURCEN-ANFRAGEVERFAHREN, BENUTZERGERÄT, BASISSTATION, UND COMPUTERLESBARES SPEICHERMEDIUM
PROCÉDÉ DE DEMANDE DE RESSOURCES VDC, ÉQUIPEMENT D'UTILISATEUR, STATION DE BASE, ET SUPPORT D'INFORMATIONS LISIBLE PAR ORDINATEUR

(30) Priority: 17.09.2014 CN 201410474977
(43) Date of publication of application: 21.06.2017
(73) Proprietor: Huawei Technologies Co., Ltd., Longgang District Shenzhen, Guangdong 518129 (CN)
(72) Inventor: MA, Jie, Shenzhen Guangdong 518129 (CN)
(74) Representative: Goddar, Heinz J.
(86) International application number: PCT/CN2015/078409
(87) International publication number: WO 2016/041359

(56) References cited:
- WO-A1-2013/069688
- WO-A1-2013/111282
- WO-A1-2014/012244
- CN-A- 101 636 933
- CN-A- 101 990 311
- CN-A- 103 379 581
- JP-A- 2014 003 355
- US-A1- 2009 129 323
- US-A1- 2009 296 680
- US-A1- 2010 323 694
- RANJEET SINGH TOMAR ET AL: "RSU centric channel allocation in Vehicular Ad-hoc Networks", WIRELESS COMMUNICATION AND SENSOR NETWORKS (WCSN), 2010 SIXTH INTERNATIONAL CONFERENCE ON, IEEE, 15 December 2010 (2010-12-15), pages 1-6, XP031913861, DOI: 10.1109/WCSN.2010.5712285 ISBN: 978-1-4244-9731-7

## Description

### TECHNICAL FIELD

The present invention relates to the communications field, and specifically, to a vehicle direct communication (VDC, Vehicle Direct Communication) resource request method, user equipment, and a base station.

### BACKGROUND

In the Internet of Vehicles, that is, a network in which vehicles are connected to each other, a mobile communications module is installed on a vehicle terminal, and communication between vehicles can be implemented by using a mobile communications network.

There are three types of vehicle service information in the Internet of Vehicles. A first type of vehicle service information is an information entertainment service, and a user in a vehicle can perform various entertainment activities by using the Internet of Vehicles. A second type of vehicle service information is a vehicle efficiency-type information service, and the information is released by a road management department or a road traffic participant and mainly includes road congestion information, road construction information, and information such as speed limitation on a road section, weather on a road section, or whether a road is available for passage. A third type of vehicle service information is a vehicle safety message, for example, including emergency brake information of a vehicle, or information prompting a coming vehicle from an opposite side when a vehicle is making a turn, and the vehicle safety message is mainly used to avoid a vehicle collision.

The first type of vehicle service information and the second type of vehicle service information may be obtained from the cloud in a communication manner such as by using the third generation mobile communications network (that is, 3G) or the fourth generation mobile communications network (that is, 4G). Therefore, a network with a wide coverage area needs to be used.

For the third type of vehicle service information, because the third type of vehicle service information is travel information of a vehicle, and the vehicle is usually in fast move, transmission of the third type of vehicle service information requires a relatively small transmission delay (the transmission delay is usually required to be less than 100 milliseconds), so as to avoid collision. Coverage of a cellular network is excessively wide, and a link establishment process is relatively complex. Therefore, a transmission delay of the cellular network is relatively large. If the third type of vehicle service information is transmitted by using a cellular network such as the 3G or 4G, a transmission delay requirement of the third type of vehicle service information cannot be satisfied. When a transmission delay does not satisfy the transmission delay requirement of the third type of vehicle service information, the third type of vehicle service information may not be sent to a vehicle terminal in time. Consequently, a traffic accident may be caused.
JP 2014 003355 A discloses a road vehicle-to-vehicle communication system having radio resource request means for transmitting a radio resource allocation request including information on the planned driving route to a management server, wherein the management server comprises receiving means for receiving the information on the planned travel route included in the radio resource allocation request and a radio resource reservation unit that reserves radio resources of the base station so as to allocate the radio resources of a base station to the vehicle.
Ranjeet Singh Tomar et al: "RSU centric channel allocation in Vehicular Ad-hoc Networks", Wireless communication and sensor networks (WCSN), 2010 sixth International conferences ON, IEEE, discloses a vehicle requesting a channel by sending a channel request packet to the road side unit (RSU) over control channel in order to communicate, where the request message contains the source and destination id, application type, current speed, timestamp, relative distance and direction of motion.
WO 2014/012244 A1 discloses a method, comprising assigning a first direct resource of a radio interface to a first vehicle-to-vehicle service based on a resource information received from a base station in a cellular mode via a cellular resource of the radio interface, wherein, in the resource information, the first direct resource and the first vehicle-to-vehicle service are indicated as being correlated, and the first vehicle-to-vehicle service is to be used or to be provided by at least a first one of one or more vehicle devices, and wherein, in the cellular mode, a communication of an apparatus performing the method with each of the one or more vehicle devices different from the apparatus is performed via the base station; performing the first vehicle-to-vehicle service via the first direct resource in a vehicle-to-vehicle mode, wherein, in the vehicle-to-vehicle mode, the communication of the apparatus with each of the one or more vehicle devices is performed directly with the respective vehicle device and does not involve the base station.

### TECHNICAL PROBLEM

The present invention provides a VDC resource request method, user equipment, and a base station, to reduce a vehicle service information transmission delay.

### TECHNICAL SOLUTIONS

A first aspect of the present invention provides a VDC resource request method, including:
sending, by the user equipment, a VDC resource request message to a base station when the user equipment needs to request a VDC resource for sending vehicle service information, where the VDC resource request message includes at least one piece of the following information: the VDC resource status list, or travel information of the user equipment, and an available VDC resource is indicated in the VDC resource status list;
receiving, by the user equipment, a VDC resource allocation indication message from the base station, where the VDC resource allocation indication message indicates a VDC resource allocated to the user equipment by the base station according to the VDC resource request message; and
sending, by the user equipment, the vehicle service information by using the VDC resource indicated by the VDC resource allocation indication message; wherein before the sending, by the user equipment, a VDC resource request message to a base station, the method includes:
sending, by the user equipment, a predetermined access preamble sequence to the base station, so that the base station learns, according to the predetermined access preamble sequence, that the user equipment currently needs to apply for a VDC resource, and allocates an uplink grant value to the user equipment for use for requesting the VDC resource; and
receiving an access acknowledgment message from the base station, where the access acknowledgment message includes the uplink grant value allocated to the user equipment by the base station; and
the sending, by the user equipment, a VDC resource request message to a base station is specifically:
   sending, by the user equipment, the VDC resource request message to the base station according to the uplink grant value in the access acknowledgment message.

Based on the first aspect of the present invention, in a first possible implementation manner, the VDC resource request message includes the VDC resource status list; and
the method further includes:
monitoring, by the user equipment, a VDC resource use status; and
updating, by the user equipment, the locally stored VDC resource status list when monitoring a change of the VDC resource use status.

Based on the first possible implementation manner of the first aspect of the present invention, in a second possible implementation manner, the monitoring, by the user equipment, a vehicle direct communication VDC resource use status includes:
obtaining VDC resource parameter information that is broadcast by the base station, where the VDC resource parameter information includes VDC resource bandwidth, VDC resource channel division, and a channel parameter; and
monitoring the VDC resource use status according to the obtained VDC resource parameter information.

A second aspect of the present invention protects another VDC resource request method, including:
receiving, by a base station, a VDC resource request message from user equipment, where the VDC resource request message includes at least one piece of the following information: a VDC resource status list, or travel information of the user equipment, and an available VDC resource is indicated in the VDC resource status list;
allocating, by the base station, a currently available VDC resource to the user equipment according to the VDC resource request message of the user equipment; and
sending, by the base station, a VDC resource allocation indication message to the user equipment, where the VDC resource allocation indication message indicates the VDC resource allocated to the user equipment by the base station, so that the user equipment sends vehicle service information by using the VDC resource indicated by the VDC resource allocation indication message;
   wherein before the receiving the VDC resource request message from the user equipment, the method includes:
   receiving, by the base station, an access preamble sequence of the user equipment;
   allocating, by the base station, an uplink grant value to the user equipment for use for requesting the VDC resource when it is determined that the access preamble sequence is a predetermined access preamble sequence;
   sending, by the base station, an access acknowledgment message to the user equipment, where the access acknowledgment message includes the uplink grant value allocated to the user equipment by the base station; and
   sending, by the user equipment, the VDC resource request message to the base station according to the uplink grant value in the access acknowledgment message.

Based on the second aspect of the present invention, in a first possible implementation manner, the VDC resource request message includes the VDC resource status list; and
before the receiving a VDC resource request message from user equipment, the method further includes:
broadcasting, by the base station, VDC resource parameter information to user equipment within a coverage area of the base station, where the VDC resource parameter information includes VDC resource bandwidth, VDC resource channel division, and a channel parameter.

Based on the second aspect of the present invention, in a second possible implementation manner, the VDC resource request message includes the travel information of the user equipment, and the travel information includes vehicle speed information of a vehicle on which the user equipment is located; and
the allocating a currently available VDC resource to the user equipment according to the VDC resource request message of the user equipment includes:
determining, by the base station, a VDC resource range according to a vehicle speed interval of the vehicle speed information of the vehicle on which the user equipment is located, where there is a correspondence between the vehicle speed interval and the VDC resource range; and
allocating, by the base station, the currently available VDC resource in the determined VDC resource range to the user equipment.

Based on the second aspect of the present invention, the first possible implementation manner of the second aspect of the present invention, or the second possible implementation manner of the second aspect of the present invention, in a third possible implementation manner, the method further includes:
receiving, by the base station, VDC resource occupation indication information from a neighboring base station, where the VDC resource occupation indication information of the neighboring base station is used to indicate an occupied VDC resource within a coverage area of the neighboring base station; and
the allocating a currently available VDC resource to the user equipment according to the VDC resource request message of the user equipment includes:
   allocating, by the base station, the currently available VDC resource to the user equipment according to the VDC resource request message of the user equipment and the VDC resource occupation indication information of the neighboring base station.

A third aspect of the present invention provides user equipment, including:
a sending unit, configured to send a VDC resource request message to a base station when the user equipment needs to request a VDC resource for sending vehicle service information, where the VDC resource request message includes at least one piece of the following information: the VDC resource status list, or travel information of the user equipment, and an available VDC resource is indicated in the VDC resource status list; and
a receiving unit, configured to receive a VDC resource allocation indication message from the base station, where the VDC resource allocation indication message indicates a VDC resource allocated to the user equipment by the base station according to the VDC resource request message; where
the sending unit is further configured to send the vehicle service information by using the VDC resource indicated by the VDC resource allocation indication message;
   wherein the sending unit is further configured to send a predetermined access preamble sequence to the base station before sending the VDC resource request message to the base station, so that the base station learns, according to the predetermined access preamble sequence, that the user equipment currently needs to apply for a VDC resource, and allocates an uplink grant value to the user equipment for use for requesting the VDC resource;
the receiving unit is further configured to receive an access acknowledgment message from the base station, and the access acknowledgment message includes the uplink grant value allocated to the user equipment by the base station; and
the sending unit is specifically configured to send the VDC resource request message to the base station according to the uplink grant value in the access acknowledgment message.

Based on the third aspect of the present invention, in a first possible implementation manner, the VDC resource request message includes the VDC resource status list; and
the user equipment further includes:
a monitoring unit, configured to monitor a vehicle direct communication VDC resource use status; and
an updating unit, configured to update the locally stored VDC resource status list when the monitoring unit monitors a change of the VDC resource use status.

Based on the first possible implementation manner of the third aspect of the present invention, in a second possible implementation manner, the monitoring unit includes:
an obtaining unit, configured to obtain VDC resource parameter information that is broadcast by the base station, where the VDC resource parameter information includes VDC resource bandwidth, VDC resource channel division, and a channel parameter; and
a monitoring subunit, configured to monitor the VDC resource use status according to the VDC resource parameter information obtained by the obtaining unit.

A fourth aspect of the present invention provides a base station, including:
a first receiving unit, configured to receive a vehicle direct communication VDC resource request message from user equipment, where the VDC resource request message includes at least one piece of the following information: a VDC resource status list, or travel information of the user equipment, and an available VDC resource is indicated in the VDC resource status list;
a first allocation unit, configured to allocate a currently available VDC resource to the user equipment according to the VDC resource request message of the user equipment received by the first receiving unit; and
a first sending unit, configured to send a VDC resource allocation indication message to the user equipment, where the VDC resource allocation indication message indicates the VDC resource allocated to the user equipment by the first allocation unit, so that the user equipment sends vehicle service information by using the VDC resource indicated by the VDC resource allocation indication message; wherein the base station further includes:
a third receiving unit, configured to receive an access preamble sequence of the user equipment;
a second allocation unit, configured to allocate an uplink grant value to the user equipment for use for requesting the VDC resource when it is determined that the access preamble sequence is a predetermined access preamble sequence; and
a second sending unit, configured to send an access acknowledgment message to the user equipment, where the access acknowledgment message includes the uplink grant value allocated to the user equipment by the base station;
wherein the VDC resource request message is sent by the user equipment to the base station according to the uplink grant value in the access acknowledgment message.

Based on the fourth aspect of the present invention, in a first possible implementation manner, the VDC resource request message includes the VDC resource status list; and
the base station further includes:
a broadcasting unit, configured to broadcast VDC resource parameter information to user equipment within a coverage area of the base station, where the VDC resource parameter information includes VDC resource bandwidth, VDC resource channel division, and a channel parameter.

Based on the fourth aspect of the present invention, in a second possible implementation manner, the VDC resource request message includes the travel information of the user equipment, and the travel information includes a vehicle speed of a vehicle on which the user equipment is located; and
the first allocation unit is specifically configured to: determine a VDC resource range according to a vehicle speed interval of the vehicle speed information of the vehicle on which the user equipment is located, and allocate the currently available VDC resource in the determined VDC resource range to the user equipment, where there is a correspondence between the vehicle speed interval and the VDC resource range.

A fifth aspect of the present invention provides a computer-readable storage medium comprising instructions which, when executed by a computer, cause the computer to carry out the method of any one of the claims 1 to 7.

### BENEFICIAL EFFECTS

It may be learned from the foregoing technical solutions of the present invention that, in the present invention, user equipment sends a VDC resource request message to a base station when the user equipment needs to send vehicle service information (for example, when the user equipment needs to send a third type of vehicle service information that requires a small transmission delay), so that the base station allocates an available VDC resource to the user equipment according to the VDC resource request message. Then, the user equipment sends the vehicle service information by using the VDC resource allocated by the base station. In an entire process, no complex link establishment process between the user equipment and the base station is required. Therefore, a vehicle service information transmission delay is effectively reduced. Moreover, experimental research data shows that a transmission delay can be less than 100 milliseconds when vehicle service information is transmitted according to the present invention, that is, a transmission delay requirement of the third type of vehicle service information can be satisfied.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic flowchart of an example of a VDC resource request method according to the present invention;
FIG. 2 is a schematic flowchart of another example of a VDC resource request method according to the present invention;
FIG. 3 is a schematic flowchart of still another example of a VDC resource request method according to the present invention;
FIG. 4 is a schematic flowchart of an embodiment of a VDC resource request method according to the present invention;
FIG. 5 is a schematic flowchart of still another example of a VDC resource request method according to the present invention;
FIG. 6 is a schematic flowchart of another embodiment of a VDC resource request method according to the present invention;
FIG. 7 is a schematic structural diagram of an embodiment of user equipment according to the present invention;
FIG. 8 is a schematic structural diagram of another embodiment of user equipment according to the present invention;
FIG. 9 is a schematic structural diagram of an example of user equipment according to the present invention;
FIG. 10 is a schematic structural diagram of an embodiment of a base station according to the present invention; and
FIG. 11 is a schematic structural diagram of an example of a base station according to the present invention.

### DESCRIPTION OF EMBODIMENTS

To make the invention objectives, features, and advantages of the present invention clearer and more comprehensible, the following clearly and completely describes the technical solutions in the embodiments of the present invention with reference to the accompanying drawings in the embodiments of the present invention. Apparently, the embodiments described are merely a part rather than all of the embodiments of the present invention. All other embodiments obtained by persons of ordinary skill in the art based on the embodiments of the present invention without creative efforts shall fall within the protection scope of the present invention.

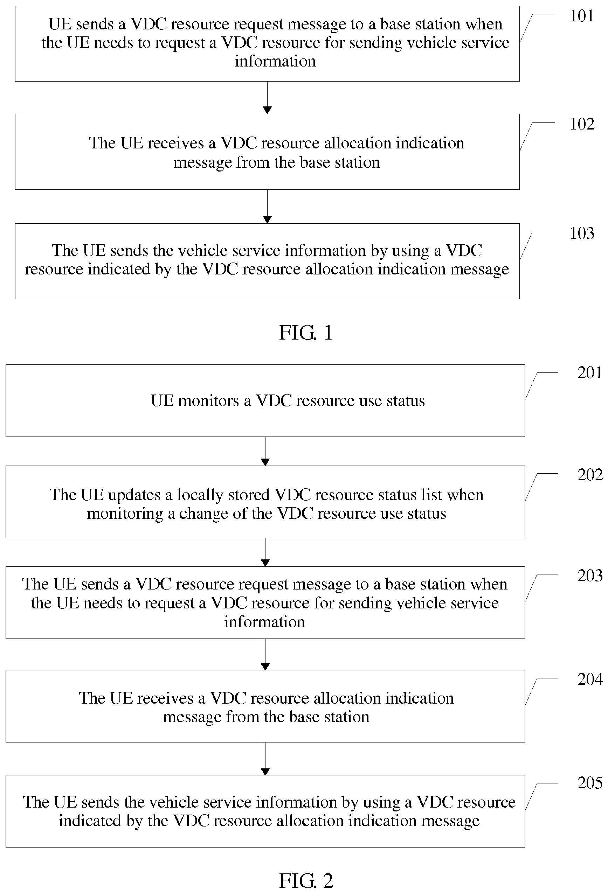

The following describes a VDC resource request method performed by user equipment (UE, User Equipment) in an example of the present invention. Referring to FIG. 1, the VDC resource request method according to this example of the present invention includes the following steps.

101. UE sends a VDC resource request message to a base station when the UE needs to request a VDC resource for sending vehicle service information.

The VDC resource request message includes at least one piece of the following information: a VDC resource status list, or travel information of the UE. An available VDC resource is indicated in the VDC resource status list.

In this example of the present invention, VDC is a vehicle direct communication technology designed based on a physical layer of a Long Term Evolution (LTE, Long Term Evolution) system, that is, VDC communication is direct communication between UE and UE. A feature of the VDC communication is as follows: A base station configures an independent VDC resource for each cell, and each UE (for example, a vehicle-mounted terminal or a handheld terminal) may obtain VDC resource parameter information by receiving a configuration message that is broadcast by the base station or by establishing a dedicated link to the base station. The VDC resource parameter information is, for example, total bandwidth of VDC resources within a coverage area of the base station, a time-frequency resource configuration parameter of a channel corresponding to each VDC resource, or a channel identifier (for example, a channel number) of a channel corresponding to a VDC resource that can be used by each UE. When sending a vehicle safety message, the UE needs to use only a VDC resource allocated to the UE by the base station. In addition, the UE needs to receive as many signals on the VDC resource as possible, so as to receive as many vehicle safety messages sent by other neighboring UE as possible. The vehicle safety message includes, for example, emergency brake information of a vehicle, or information prompting a coming vehicle at an opposite side when a vehicle is making a turn. The vehicle safety message is mainly used to avoid vehicle collision.

Optionally, the UE may locally maintain the VDC resource status list on the UE by monitoring a VDC resource use status, and sends, to the base station when the UE needs to request the VDC resource for sending the vehicle service information, the VDC resource request message that carries the locally maintained VDC resource status list, so that the base station allocates the VDC resource to the UE according to the VDC resource status list.

Optionally, the VDC resource request message further includes a radio network temporary identifier (RNTI, Radio Network Temporary Identity) of the UE, and the RNTI is allocated to the UE by the base station when the UE is accessing a cellular network.

Optionally, the travel information includes one or more pieces of the following information: vehicle speed information of a vehicle on which the UE is located, or geographical location information and/or a travel direction of a vehicle on which the UE is located.

In this example of the present invention, the UE requests the VDC resource mainly for sending a third type of vehicle service information. Certainly, the UE may request the VDC resource for sending other vehicle service information.

Optionally, the UE is connected to a control management system of the vehicle on which the UE is located. The UE may obtain the travel information (for example, the vehicle speed information, brake information, or turning information) of the vehicle from the control management system of the vehicle on which the UE is located. Optionally, the UE may obtain, by using a positioning module (for example, a Global Positioning System (GPS, Global Positioning System) module) configured on the UE, the geographical location information, the travel direction, or the like of the vehicle on which the UE is located. The UE generates one or more pieces of third type of vehicle service information according to the obtained geographical location information, travel direction, travel information, or the like of the vehicle. Each time the UE generates one piece of third type of vehicle service information, the UE requests a VDC resource from the base station for sending the generated third type of vehicle service information. In this example of the present invention, the UE sends the VDC resource request message to the base station. It should be noted that the third type of vehicle service information in this example of the present invention may be specifically generated with reference to an existing manner for generating a third type of vehicle service information, and details are not described herein.

102. The UE receives a VDC resource allocation indication message from the base station.

The VDC resource allocation indication message indicates a VDC resource allocated to the UE by the base station according to the VDC resource request message.

103. The UE sends the vehicle service information by using a VDC resource indicated by the VDC resource allocation indication message.

It should be noted that the UE in this example of the present invention may be a vehicle-mounted terminal, a handheld terminal, or another terminal that can be connected to a vehicle control management system, and is not limited herein.

It may be learned from the foregoing technical solution of the present invention that, in the present invention, user equipment sends a VDC resource request message to a base station when the user equipment needs to send vehicle service information (for example, when the user equipment needs to send a third type of vehicle service information that requires a small transmission delay), so that the base station allocates an available VDC resource to the user equipment according to the VDC resource request message. Then, the user equipment sends the vehicle service information by using the VDC resource allocated by the base station. In an entire process, no complex link establishment process between the user equipment and the base station is required. Therefore, a vehicle service information transmission delay is effectively reduced. Moreover, experimental research data shows that a transmission delay can be less than 100 milliseconds when vehicle service information is transmitted according to the present invention, that is, a transmission delay requirement of the third type of vehicle service information can be satisfied.

The following further describes a VDC resource request method performed by UE in an example of the present invention. In this example of the present invention, a VDC resource request message carries a VDC resource status list. Referring to FIG. 2, the VDC resource request method according to this example of the present invention includes the following steps.

201. UE monitors a VDC resource use status.

In this example of the present invention, VDC is a vehicle direct communication technology designed based on a physical layer of an LTE system, that is, VDC communication is direct communication between UE and UE. A feature of the VDC communication is as follows: A base station configures an independent VDC resource for each cell, and each UE (for example, a vehicle-mounted terminal or a handheld terminal) may obtain VDC resource parameter information by receiving a configuration message that is broadcast by the base station or by establishing a dedicated link to the base station. The VDC resource parameter information is, for example, total bandwidth of VDC resources within a coverage area of the base station, a time-frequency resource configuration parameter of a channel corresponding to each VDC resource, or a channel identifier (for example, a channel number) of a channel corresponding to a VDC resource that can be used by each UE. When sending a vehicle safety message, the UE needs to use only a VDC resource allocated to the UE by the base station. In addition, the UE needs to receive as many signals on the VDC resource as possible, so as to receive as many vehicle safety messages sent by other neighboring UE as possible. The vehicle safety message includes, for example, emergency brake information of a vehicle, or information prompting a coming vehicle at an opposite side when a vehicle is making a turn. The vehicle safety message is mainly used to avoid vehicle collision.

In this example of the present invention, the base station manages a VDC resource, but the VDC resource may not be a resource used for cellular communication between the base station and the UE. For example, a cellular communication resource between the base station and the UE is a spectrum of 2.6 gigahertz (that is, GHz), and the VDC resource is a spectrum of 5.9 GHz; or a cellular communication resource between the base station and the UE is a frequency division duplex (FDD, Frequency Division Duplex) spectrum of 2.6 gigahertz, and the VDC resource is a time division duplex (TDD, Time Division Duplexing) spectrum of 2.6 GHz.

Optionally, the base station broadcasts the VDC resource parameter information on a broadcast channel (BCH, Broadcast Channel) of a cellular communication resource spectrum. The VDC resource parameter information includes VDC resource bandwidth, VDC resource channel division, and a channel parameter. The channel parameter includes but is not limited to a channel time-domain resource, a channel frequency-domain resource, a channel retransmission moment, a channel modulation and coding scheme, and the like. In this way, all UEs in the coverage area of the base station can obtain the VDC resource parameter information that is broadcast by the base station, and starts to monitor a VDC resource use status in the coverage area of the base station according to the obtained VDC resource parameter information, so as to learn a currently occupied VDC resource and a currently idle (that is, available) VDC resource in the coverage area of the base station. Alternatively, in this example of the present invention, the base station may not broadcast VDC resource parameter information. When the UE enters the coverage area of the base station, the UE requests the VDC resource parameter information from the base station, and the base station sends the VDC resource parameter information to the UE after receiving a request of the UE, so that the UE monitors a VDC resource use status. Certainly, the UE may monitor the VDC resource use status in a manner other than the foregoing two manners. This is not limited herein.

It should be noted that, in this example of the present invention, a criterion for determining that a VDC resource is occupied is that the UE detects that energy on the VDC resource is greater than a preset threshold, and a criterion for determining that a VDC resource is idle is that the UE detects that energy on the VDC resource is not greater than the preset threshold. That is, when detecting that energy on a VDC resource is greater than the preset threshold, the UE determines that the VDC resource is currently occupied; when detecting that energy on a VDC resource is not greater than the preset threshold, the UE determines that the VDC resource is currently idle. The energy is usually represented by a power value.

202. The UE updates a locally stored VDC resource status list when monitoring a change of the VDC resource use status.

An available VDC resource is indicated in the VDC resource status list.

For example, it is assumed that there are four channels, channel numbers are separately 5, 6, 7, and 9, and the four channels are separately corresponding to different VDC resources. A VDC resource status list maintained by UE 1 is shown in Table 1.

**Table 1**

| **Channel number** | **Status** |
|---|---|
| 5 | Idle |
| 6 | Occupied |
| 7 | Idle |
| 9 | Occupied |

In Table 1, a VDC resource corresponding to a channel in an idle state is a VDC resource currently available to the UE 1, and a VDC resource corresponding to a channel in an occupied state is a VDC resource currently unavailable to the UE 1.

When the UE 1 monitors a change of a VDC resource use status, for example, the UE 1 learns, by means of monitoring, that a VDC resource corresponding to a channel whose channel number is 5 is occupied and a VDC resource corresponding to a channel whose channel number is 6 is not occupied, the UE 1 updates the VDC resource status list in Table 1. The updated VDC resource status list is shown in Table 2.

**Table 2**

| **Channel number** | **Status** |
|---|---|
| 5 | Occupied |
| 6 | Idle |
| 7 | Idle |
| 9 | Occupied |

203. The UE sends a VDC resource request message to a base station when the UE needs to request a VDC resource for sending vehicle service information.

The VDC resource request message includes the VDC resource status list.

Optionally, the VDC resource request message further includes travel information of the UE and/or an RNTI of the UE, and the RNTI is allocated to the UE by the base station when the UE is accessing a cellular network. Optionally, the travel information includes one or more pieces of the following information: vehicle speed information of a vehicle on which the UE is located, or geographical location information and/or a travel direction of a vehicle on which the UE is located. In this example of the present invention, the UE requests the VDC resource mainly for sending a third type of vehicle service information. Certainly, the UE may request the VDC resource for sending other vehicle service information.

Optionally, the UE is connected to a control management system of the vehicle on which the UE is located. The UE may obtain the travel information (for example, the vehicle speed information, brake information, or turning information) of the vehicle from the control management system of the vehicle on which the UE is located. Optionally, the UE may obtain, by using a positioning module (for example, a GPS module) configured on the UE, the geographical location information, the travel direction, or the like of the vehicle on which the UE is located. The UE generates one or more pieces of third type of vehicle service information according to the obtained geographical location information, travel direction, travel information, or the like of the vehicle. Each time the UE generates one piece of third type of vehicle service information, the UE requests a VDC resource from the base station for sending the generated third type of vehicle service information. In this example of the present invention, the UE sends the VDC resource request message to the base station. It should be noted that the third type of vehicle service information in this example of the present invention may be specifically generated with reference to an existing manner for generating a third type of vehicle service information, and details are not described herein.

204. The UE receives a VDC resource allocation indication message from the base station.

The VDC resource allocation indication message indicates a VDC resource allocated to the UE by the base station according to the VDC resource request message.

205. The UE sends the vehicle service information by using a VDC resource indicated by the VDC resource allocation indication message.

It should be noted that the UE in this example of the present invention may be a vehicle-mounted terminal, a handheld terminal, or another terminal that can be connected to a vehicle control management system, and is not limited herein.

It may be learned from the foregoing technical solution of the present invention that, in the present invention, user equipment pre-monitors a VDC resource use status, updates a locally stored VDC resource status list, and when the user equipment needs to send vehicle service information (for example, when the user equipment needs to send a third type of vehicle service information that requires a small transmission delay), requests an idle resource in the VDC resource status list from a base station, and then sends the vehicle service information by using a VDC resource allocated by the base station. In an entire process, no complex link establishment process between the user equipment and the base station is required. Therefore, a vehicle service information transmission delay is effectively reduced. Moreover, experimental research data shows that a transmission delay can be less than 100 milliseconds when vehicle service information is transmitted according to the present invention, that is, a transmission delay requirement of the third type of vehicle service information can be satisfied.

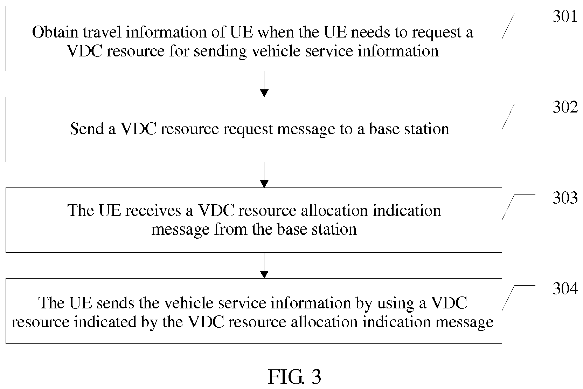

The following further describes a VDC resource request method performed by UE in an example of the present invention. In this example of the present invention, a VDC resource request message carries travel information of a vehicle on which the UE is located. Referring to FIG. 3, the VDC resource request method according to this example of the present invention includes the following steps.

301. Obtain travel information of UE when the UE needs to request a VDC resource for sending vehicle service information.

Optionally, the travel information includes one or more pieces of the following information: vehicle speed information of a vehicle on which the UE is located, or geographical location information and/or a travel direction of a vehicle on which the UE is located.

In this example of the present invention, the UE is connected to a control management system of the vehicle on which the UE is located, and the UE may obtain the vehicle speed information of the vehicle on which the UE is located from the control management system of the vehicle on which the UE is located. In addition, the UE may obtain, by using a positioning module (for example, a GPS module) configured on the UE, the geographical location information, the travel direction, or the like of the vehicle on which the UE is located.

302. Send a VDC resource request message to a base station.

The VDC resource request message includes the travel information of the UE obtained in step 301.

Optionally, the VDC resource request message may further include a VDC resource status list and/or an RNTI of the UE. The RNTI is allocated to the UE by the base station when the UE is accessing a cellular network. An available VDC resource is indicated in the VDC resource status list. Optionally, the UE may locally maintain the VDC resource status list on the UE by monitoring a VDC resource use status. Specifically, for a manner for maintaining a local VDC resource status list by the UE, refer to a description in step 202 in the example shown in FIG. 2. Details are not described herein.

In this example of the present invention, VDC is a vehicle direct communication technology designed based on a physical layer of an LTE system, that is, VDC communication is direct communication between UE and UE. A feature of the VDC communication is as follows: A base station configures an independent VDC resource for each cell, and each UE (for example, a vehicle-mounted terminal or a handheld terminal) may obtain VDC resource parameter information by receiving a configuration message that is broadcast by the base station or by establishing a dedicated link to the base station. The VDC resource parameter information is, for example, total bandwidth of VDC resources within a coverage area of the base station, a time-frequency resource configuration parameter of a channel corresponding to each VDC resource, or a channel identifier (for example, a channel number) of a channel corresponding to a VDC resource that can be used by each UE. When sending a vehicle safety message, the UE needs to use only a VDC resource allocated to the UE by the base station. In addition, the UE needs to receive as many signals on the VDC resource as possible, so as to receive as many vehicle safety messages sent by other neighboring UE as possible. The vehicle safety message includes, for example, emergency brake information of a vehicle, or information prompting a coming vehicle at an opposite side when a vehicle is making a turn. The vehicle safety message is mainly used to avoid vehicle collision.

303. The UE receives a VDC resource allocation indication message from the base station.

The VDC resource allocation indication message indicates a VDC resource allocated to the UE by the base station according to the VDC resource request message.

304. The UE sends the vehicle service information by using a VDC resource indicated by the VDC resource allocation indication message.

It should be noted that the UE in this example of the present invention may be a vehicle-mounted terminal, a handheld terminal, or another terminal that can be connected to a vehicle control management system, and is not limited herein.

It may be learned from the foregoing technical solution of the present invention that, in the present invention, when vehicle service information needs to be sent (for example, when a third type of vehicle service information that requires a small transmission delay needs to be sent), travel information of the UE is obtained, and a VDC resource request message that carries the travel information of the UE is sent to a base station, so that the base station allocates an available VDC resource to the user equipment according to the VDC resource request message. Then, the user equipment sends the vehicle service information by using the VDC resource allocated by the base station. In an entire process, no complex link establishment process between the user equipment and the base station is required. Therefore, a vehicle service information transmission delay is effectively reduced. Moreover, experimental research data shows that a transmission delay can be less than 100 milliseconds when vehicle service information is transmitted according to the present invention, that is, a transmission delay requirement of the third type of vehicle service information can be satisfied.

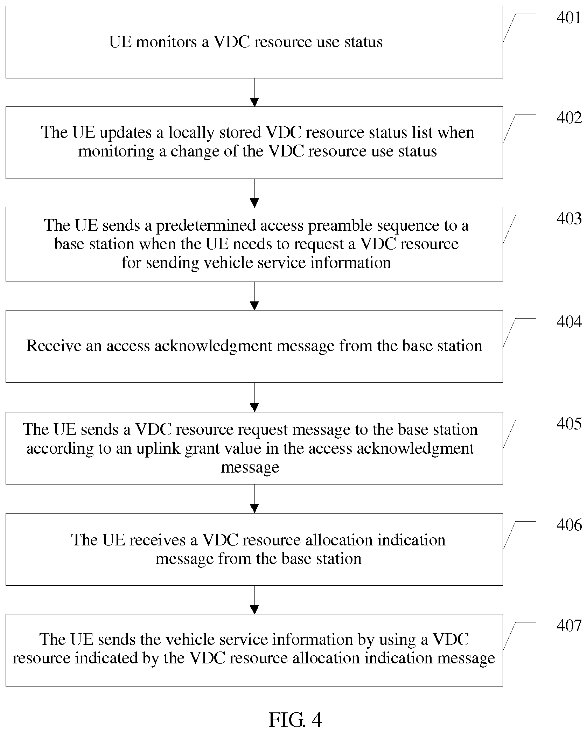

The following further describes a VDC resource request method performed by UE in an embodiment of the present invention. This embodiment of the present invention includes an access request scheme of the UE, and a VDC resource request message carries a VDC resource status list and travel information of a vehicle on which the UE is located. Certainly, based on this embodiment of the present invention and the foregoing embodiments, the VDC resource request message may carry only one of the following: a VDC resource status list, or travel information of a vehicle on which the UE is located. Referring to FIG. 4, the VDC resource request method according to this embodiment of the present invention includes the following steps.

401. UE monitors a VDC resource use status.

Step 401 is similar to step 201 in the example shown in FIG. 2. For a specific implementation manner of step 401, refer to a description in step 201. Details are not described herein.

402. The UE updates a locally stored VDC resource status list when monitoring a change of the VDC resource use status.

An available VDC resource is indicated in the VDC resource status list.

Step 402 is similar to step 202 in the example shown in FIG. 2. For a specific implementation process of step 402, refer to a description in step 202 in the example shown in FIG. 2. Details are not described herein.

403. The UE sends a predetermined access preamble sequence to a base station when the UE needs to request a VDC resource for sending vehicle service information.

A third type of vehicle service information is characterized by burstiness. Therefore, in this embodiment of the present invention, in access timeslot configuration, each subframe within a coverage area of the base station is configured as accessible to the UE. Therefore, the base station needs to notify, by using a broadcast message or by using a dedicated signaling after the UE performs authentication, the UE that the UE can initiate access to all subframes. In addition, a base station side also needs to ensure that the base station side is always prepared for receiving the access preamble sequence (that is, a preamble) from the UE. The base station provides both a cellular network and a VDC service. Therefore, in this embodiment of the present invention, an independent preamble set is preset for requesting a VDC resource by the UE, so that the base station can rapidly process a VDC resource request from the UE. The preamble set includes one or more preambles dedicated for the VDC resource request. When the UE needs to request a VDC resource for sending the vehicle service information, the UE selects a preamble from the preamble set, and sends the preamble to the base station. Specifically, when the UE needs to request a VDC resource for sending the vehicle service information, a Media Access Control (MAC, Media Access Control) layer of the UE selects a preamble from the preamble set, and sends the preamble to a physical layer (that is, a PHY layer) of the UE, and the PHY layer of the UE sends the preamble to the base station in a next nearest subframe.

In this embodiment of the present invention, the UE requests the VDC resource mainly for sending the third type of vehicle service information. Certainly, the UE may request the VDC resource for sending other vehicle service information.

Optionally, the UE is connected to a control management system of a vehicle on which the UE is located. The UE may obtain travel information (for example, vehicle speed information, brake information, or turning information) of the vehicle from the control management system of the vehicle on which the UE is located. Optionally, the UE may obtain, by using a positioning module (for example, a
GPS module) configured on the UE, geographical location information, a travel direction, or the like of the vehicle on which the UE is located. The UE generates one or more pieces of third type of vehicle service information according to the obtained geographical location information, travel direction, travel information, or the like of the vehicle. Each time the UE generates one piece of third type of vehicle service information, the UE requests a VDC resource from the base station for sending the generated third type of vehicle service information. In this embodiment of the present invention, the UE sends the predetermined preamble to the base station. It should be noted that the third type of vehicle service information in this embodiment of the present invention may be specifically generated with reference to an existing manner for generating a third type of vehicle service information, and details are not described herein.

404. Receive an access acknowledgment message from the base station.

The access acknowledgment message includes an uplink grant value allocated to the UE by the base station.

In this embodiment of the present invention, when the base station receives the preamble sent by the UE in step 403, and finds that the preamble is a preamble dedicated for requesting a VDC resource by the UE, the base station allocates a large enough uplink grant value (that is, UL grant) to the UE. Generally, geographical location information includes 10 to 20 bytes, and a VDC resource status list is related to a VDC resource quantity. In this embodiment of the present invention, the base station allocates the UL grant to the UE in two manners. A first manner is allocating the UL grant to the UE according to a maximum byte quantity. A second manner is as follows: A quantity of bytes that are sent at the request of the UE is indicated by using the preamble, and the base station allocates, to the UE, a nearest UL grant greater than or equal to the quantity of bytes that are sent at the request of the UE. Optionally, the base station classifies preambles into, for example, three types. A first type of preamble is corresponding to a quantity, less than or equal to 128, of bytes that are sent at request. A second type of preamble is corresponding to a quantity, greater than 128 and less than or equal to 256, of bytes that are sent at request. A third type of preamble is corresponding to a quantity, greater than 256 and less than or equal to 384, of bytes that are sent at request. Specifically, the preambles are not limitedly classified into the foregoing three types, that is, a byte quantity of each type of preamble may be configured according to an actual situation. Further, the base station may broadcast preamble classification information (including byte quantities corresponding to various types of preamble) to the UE by using a broadcast message.

Optionally, after allocating the UL grant to the UE, the base station determines a timing advance (TA, Timing Advance) of the UE, and adds the TA of the UE to the access acknowledgment message, so that the UE adjusts a sending time point according to the TA. Certainly, the base station may not determine a TA of the UE, that is, the access acknowledgment message may not carry the TA of the UE, and the UE adjusts a sending time point according to a downlink TA or an existing TA.

405. The UE sends a VDC resource request message to the base station according to an uplink grant value in the access acknowledgment message.

The VDC resource request message includes the VDC resource status list and the travel information of the UE.

Optionally, the travel information includes one or more pieces of the following information: the vehicle speed information of the vehicle on which the UE is located, or the geographical location information and/or the travel direction of the vehicle on which the UE is located.

In this embodiment of the present invention, the UE is connected to a control management system of the vehicle on which the UE is located, and the UE may obtain the vehicle speed information of the vehicle on which the UE is located from the control management system of the vehicle on which the UE is located. In addition, the UE may obtain, by using a positioning module (for example, a GPS module) configured on the UE, the geographical location information, the travel direction, or the like of the vehicle on which the UE is located.

Optionally, the VDC resource request message further includes an RNTI of the UE, and the RNTI is allocated to the UE by the base station when the UE is accessing a cellular network.

406. The UE receives a VDC resource allocation indication message from the base station.

The VDC resource allocation indication message indicates a VDC resource allocated to the UE by the base station according to the VDC resource request message.

407. The UE sends the vehicle service information by using a VDC resource indicated by the VDC resource allocation indication message.

It should be noted that the UE in this embodiment of the present invention may be a vehicle-mounted terminal, a handheld terminal, or another terminal that can be connected to a vehicle control management system, and is not limited herein.

It may be learned from the foregoing technical solution of the present invention that, in the present invention, user equipment pre-monitors a VDC resource use status, updates a locally stored VDC resource status list, and when the user equipment needs to send vehicle service information (for example, when the user equipment needs to send a third type of vehicle service information that requires a small transmission delay), requests an idle resource in the VDC resource status list from a base station, and then sends the vehicle service information by using a VDC resource allocated by the base station. In an entire process, no complex link establishment process between the user equipment and the base station is required. Therefore, a vehicle service information transmission delay is effectively reduced. Moreover, experimental research data shows that a transmission delay can be less than 100 milliseconds when vehicle service information is transmitted according to the present invention, that is, a transmission delay requirement of the third type of vehicle service information can be satisfied.

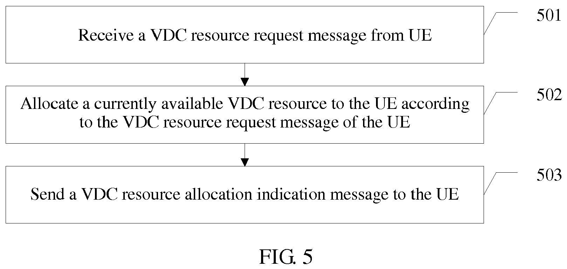

The following describes a VDC resource request method performed by a base station in an example of the present invention. Referring to FIG. 5, the VDC resource request method according to this example of the present invention includes the following steps.

501. Receive a VDC resource request message from UE.

The VDC resource request message includes at least one piece of the following information: a VDC resource status list, or travel information of the UE. An available VDC resource is indicated in the VDC resource status list.

Optionally, the VDC resource request message further includes an RNTI of the UE, and the RNTI is allocated to the UE by the base station when the UE is accessing a cellular network.

Optionally, the travel information includes one or more pieces of the following information: vehicle speed information of a vehicle on which the UE is located, or geographical location information and/or a travel direction of a vehicle on which the UE is located.

In this example of the present invention, VDC is a vehicle direct communication technology designed based on a physical layer of a Long Term Evolution (LTE, Long Term Evolution) system, that is, VDC communication is direct communication between UE and UE. A feature of the VDC communication is as follows: A base station configures an independent VDC resource for each cell, and each UE (for example, a vehicle-mounted terminal or a handheld terminal) may obtain VDC resource parameter information by receiving a configuration message that is broadcast by the base station or by establishing a dedicated link to the base station. The VDC resource parameter information is, for example, total bandwidth of VDC resources within a coverage area of the base station, a time-frequency resource configuration parameter of a channel corresponding to each VDC resource, or a channel identifier (for example, a channel number) of a channel corresponding to a VDC resource that can be used by each UE. When sending a vehicle safety message, the UE needs to use only a VDC resource allocated to the UE by the base station. In addition, the UE needs to receive as many signals on the VDC resource as possible, so as to receive as many vehicle safety messages sent by other neighboring UE as possible. The vehicle safety message includes, for example, emergency brake information of a vehicle, or information prompting a coming vehicle at an opposite side when a vehicle is making a turn. The vehicle safety message is mainly used to avoid vehicle collision.

In an implementation manner of the present invention, if the VDC resource request message carries at least the VDC resource status list, the base station broadcasts VDC resource parameter information on a BCH of a cellular communication resource spectrum. The VDC resource parameter information includes VDC resource bandwidth, VDC resource channel division, and a channel parameter. The channel parameter includes but is not limited to a channel time-domain resource, a channel frequency-domain resource, a channel retransmission moment, a channel modulation and coding scheme, and the like. In this way, all UEs in the coverage area of the base station can obtain the VDC resource parameter information that is broadcast by the base station, and starts to monitor a VDC resource use status in the coverage area of the base station according to the obtained VDC resource parameter information, so as to update a VDC resource status list locally maintained on each UE. Alternatively, in this example of the present invention, the base station may not broadcast VDC resource parameter information. When the UE enters the coverage area of the base station, the UE requests the VDC resource parameter information from the base station, and the base station sends the VDC resource parameter information to the UE after receiving a request of the UE, so that the UE monitors a VDC resource use status, and updates a VDC resource status list locally maintained on the UE.

In another implementation manner of the present invention, if the VDC resource request message carries at least the travel information of the UE, the UE may be connected to a control management system of the vehicle on which the UE is located, and obtain the vehicle speed information of the vehicle on which the UE is located from the control management system of the vehicle on which the UE is located. Optionally, the UE obtains, by using a positioning module (for example, a GPS module) configured on the UE, the geographical location information, the travel direction, or the like of the vehicle on which the UE is located. The travel information further includes the geographical location information and the travel direction that are of the vehicle on which the UE is located.

In this example of the present invention, the UE sends the VDC resource request message to the base station when the UE needs to request a VDC resource for sending vehicle service information.

502. Allocate a currently available VDC resource to the UE according to the VDC resource request message of the UE.

In an implementation manner, if the VDC resource request message carries the VDC resource status list and does not carry the travel information of the UE, the base station selects a VDC resource currently available to the UE from the VDC resource status list according to the VDC resource status list carried in the VDC resource request message, and allocates the VDC resource to the UE.

In another implementation manner, if the VDC resource request message carries the travel information of the UE and does not carry the VDC resource status list, and the travel information includes the vehicle speed information of the vehicle on which the UE is located, the base station allocates a currently available VDC resource to the UE according to the travel information of the UE. Specifically, the base station determines several vehicle speed intervals by means of division, and establishes a correspondence between a vehicle speed interval and a VDC resource. After obtaining the travel information of the UE, the base station may learn the vehicle speed information of the vehicle on which the UE is located, determine a VDC resource range according to a vehicle speed interval of the vehicle speed information of the vehicle on which the UE is located, then select a VDC resource currently available to the UE from the determined VDC resource range for the UE, and allocate the VDC resource to the UE. For example, it is assumed that VDC resources are classified into three types: A first type of VDC resource is corresponding to a vehicle speed interval of 90 kilometers/hour, a second type of VDC resource is corresponding to a vehicle speed interval of 60 kilometers/hour (60 kilometers/hour is not included), and a third type of VDC resource is corresponding to a vehicle speed interval of less than 60 kilometers/hour. It is assumed that a vehicle speed of the vehicle on which the UE is located is 70 kilometers/hour, and the base station learns, by using the VDC resource request message, that the vehicle speed of the vehicle on which the UE is located is 70 kilometers/hour. Because the 70 kilometers/hour is in the vehicle speed interval of 60 kilometers/hour, the base station determines a second type of VDC resource, and selects a VDC resource currently available to the UE from the second type of VDC resource.

Certainly, the VDC resource request message may further carry both the VDC resource status list and the travel information of the UE. The base station allocates a currently available VDC resource to the UE with reference to the foregoing two implementation manners.

Optionally, the base station further interacts VDC resource occupation indication information with a neighboring base station of the base station. The VDC resource occupation indication information is used to indicate occupied VDC resources in respective coverage areas of the base stations. Further, the base station allocates the currently available VDC resource to the UE with reference to the VDC resource request message of the UE and VDC resource occupation indication information of the neighboring base station, so as to avoid collision with a VDC resource within a coverage area of the neighboring base station when the VDC resource is allocated to the UE.

503. Send a VDC resource allocation indication message to the UE.

The VDC resource allocation indication message indicates the VDC resource allocated to the UE by the base station, so that the UE sends the vehicle service information by using the VDC resource indicated by the VDC resource allocation indication message.

A vehicle passes a cell in coverage of a base station in a relatively short time when the vehicle moves at a high speed. If all cells reallocate VDC resources, the VDC resource may be switched for excessively many times in a unit time (for example, one minute). Therefore, the base station expects that a vehicle at a high speed switches a VDC resource for as few times as possible. In addition, a neighboring base station needs to have a same correspondence between a vehicle speed and a VDC resource. Therefore, optionally, in this example of the present invention, the UE adds the travel information of the UE to the VDC resource request message. In addition to the vehicle speed information of the vehicle on which the UE is located, the travel information of the UE further includes the geographical location information and the travel direction that are of the vehicle on which the UE is located. After allocating the available VDC resource to the UE in step 502, the base station further determines, according to the geographical location information and the travel direction that are of the vehicle on which the UE is located, a use range for using the VDC resource by the UE, and the use range specifically refers to duration in which the VDC resource can be used, that is, duration in which the VDC resource can be used after a VDC resource allocation instruction is received; or determines a condition for changing the VDC resource, for example, determines that the vehicle on which the UE is located needs to apply for a resource again after the UE arrives at a particular place. The base station adds, to the VDC resource allocation indication message sent to the UE, the use range of the VDC resource or the condition for changing the VDC resource, so that the UE initiates a VDC resource request to the base station again when a specified time expires or when the vehicle on which the UE is located satisfies the condition for changing the VDC resource (for example, the vehicle on which the UE is located arrives at a designated place).

Optionally, the base station sends the VDC resource allocation indication message to the UE by using a physical downlink shared channel (PDSCH, Physical Downlink Shared Channel).

It should be noted that the UE in this example of the present invention may be a vehicle-mounted terminal, a handheld terminal, or another terminal that can be connected to a vehicle control management system, and is not limited herein.

It may be learned from the foregoing technical solution of the present invention that, in the present invention, after receiving a VDC resource request message of UE, a base station allocates an available VDC resource to the UE according to the resource request message, and indicates the VDC resource to the UE by using a VDC resource allocation indication message, so that the UE sends, according to indication of the VDC resource allocation indication message, vehicle service information by using the VDC resource allocated by the base station. In an entire process, no complex link establishment process between the user equipment and the base station is required. Therefore, a vehicle service information transmission delay is effectively reduced. Moreover, experimental research data shows that a transmission delay can be less than 100 milliseconds when vehicle service information is transmitted according to the present invention, that is, a transmission delay requirement of a third type of vehicle service information can be satisfied.

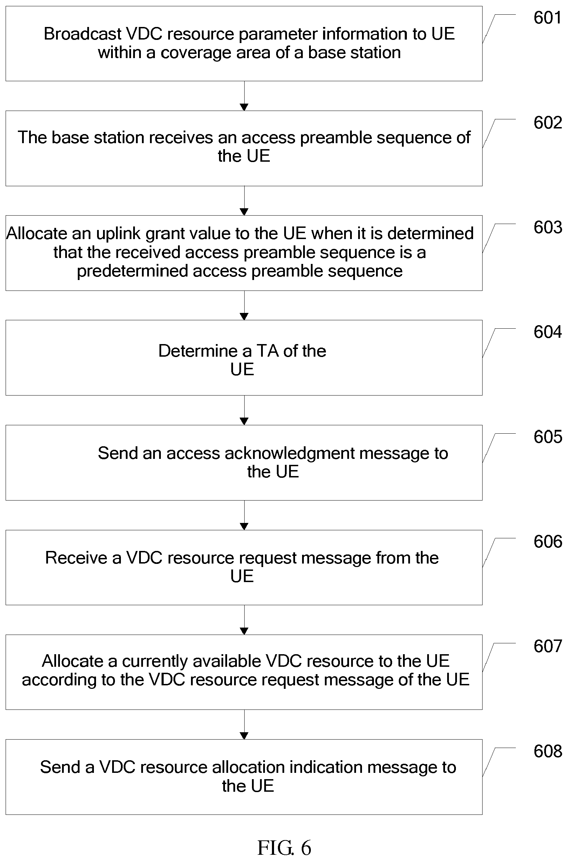

The following further describes a VDC resource request method performed by a base station in an embodiment of the present invention. This embodiment of the present invention includes an access request scheme of UE, and a VDC resource request message carries a VDC resource status list and travel information of a vehicle on which the UE is located. Certainly, based on this embodiment of the present invention and the foregoing embodiments, the VDC resource request message may carry only one of the following: a VDC resource status list, or travel information of a vehicle on which the UE is located. Referring to FIG. 6, the VDC resource request method according to this embodiment of the present invention includes the following steps.

601. Broadcast VDC resource parameter information to UE within a coverage area of a base station.

The VDC resource parameter information includes VDC resource bandwidth, VDC resource channel division, and a channel parameter.

In this embodiment of the present invention, the base station broadcasts the VDC resource parameter information to the UE in the coverage area of the base station on a BCH of a cellular communication resource spectrum. In this way, all UEs in the coverage area of the base station can obtain the VDC resource parameter information that is broadcast by the base station, and starts to monitor a VDC resource use status in the coverage area of the base station according to the obtained VDC resource parameter information, so as to update a VDC resource status list.

602. The base station receives an access preamble sequence of the UE.

A third type of vehicle service information is characterized by burstiness. Therefore, in this embodiment of the present invention, in access timeslot configuration, each subframe in the coverage area of the base station is configured as accessible to the UE. Therefore, the base station needs to notify, by using a broadcast message or by using a dedicated signaling after the UE performs authentication, the UE that the UE can initiate access to all subframes. In addition, a base station side also needs to ensure that the base station side is always prepared for receiving the access preamble sequence (that is, a preamble) from the UE. The base station provides both a cellular network and a VDC service. Therefore, in this embodiment of the present invention, an independent preamble set is preset for requesting a VDC resource by the UE, so that the base station can rapidly process a VDC resource request from the UE. The preamble set includes one or more preambles dedicated for the VDC resource request. When the UE needs to request a VDC resource for sending the vehicle service information, the UE selects a preamble from the preamble set, and sends the preamble to the base station. Specifically, when the UE needs to request a VDC resource for sending the vehicle service information, MAC of the UE selects a preamble from the preamble set, and sends the preamble to a physical layer (that is, a PHY layer) of the UE, and the PHY layer of the UE sends the preamble to the base station in a next nearest subframe.

603. Allocate an uplink grant value to the UE when it is determined that the received access preamble sequence is a predetermined access preamble sequence.

In this embodiment of the present invention, when the base station determines that the received preamble is the predetermined preamble, for example, a preamble in the preamble set, the base station allocates the uplink grant value (that is, UL grant) to the UE.

In this embodiment of the present invention, to ensure that the UE can rapidly return a VDC resource request message, the base station allocates a large enough UL grant to the UE when determining that the received preamble is the predetermined preamble.

Generally, geographical location information includes 10 to 20 bytes, and a VDC resource status list is related to a VDC resource quantity. In this embodiment of the present invention, the base station allocates the UL grant to the UE in two manners. A first manner is allocating the UL grant to the UE according to a maximum byte quantity. A second manner is as follows: A quantity of bytes that are sent at the request of the UE is indicated by using the preamble, and the base station allocates, to the UE, a nearest UL grant greater than or equal to the quantity of bytes that are sent at the request of the UE. Optionally, the base station classifies preambles into, for example, three types. A first type of preamble is corresponding to a quantity, less than or equal to 128, of bytes that are sent at request. A second type of preamble is corresponding to a quantity, greater than 128 and less than or equal to 256, of bytes that are sent at request. A third type of preamble is corresponding to a quantity, between 256 and 384, of bytes that are sent at request. Specifically, the preambles are not limitedly classified into the foregoing three types, that is, a byte quantity of each type of preamble may be configured according to an actual situation. Further, the base station may broadcast preamble classification information (including byte quantities corresponding to various types of preamble) to the UE by using a broadcast message.

604. Determine a TA of the UE.

For determining of the TA of the UE by the base station, refer to an existing solution. Details are not described herein.

605. Send an access acknowledgment message to the UE.

The access acknowledgment message includes the TA of the UE and the uplink grant value allocated to the UE by the base station. Therefore, after adjusting a sending time point according to the TA in the access acknowledgment message, the UE sends the VDC resource request message to the base station according to the uplink grant value in the access acknowledgment message.

606. Receive a VDC resource request message from the UE.

Step 606 is similar to step 501 in the example shown in FIG. 5. For a specific implementation manner of step 606, refer to a description in step 501. Details are not described herein.

607. Allocate a currently available VDC resource to the UE according to the VDC resource request message of the UE.

The base station allocates the currently available VDC resource to the UE according to the VDC resource status list and travel information of the UE that are carried in the VDC resource request message of the UE.

Optionally, the base station further interacts VDC resource occupation indication information with a neighboring base station of the base station. The VDC resource occupation indication information is used to indicate occupied VDC resources in respective coverage areas of the base stations. Further, the base station allocates the currently available VDC resource to the UE with reference to the VDC resource request message of the UE and VDC resource occupation indication information of the neighboring base station, so as to avoid collision with a VDC resource within a coverage area of the neighboring base station when the VDC resource is allocated to the UE.

Optionally, when the base station interacts VDC resource occupation information with the neighboring base station, travel direction information of a corresponding vehicle during use of each VDC resource is further carried, so that a base station that receives the VDC resource occupation information can determine whether the occupied VDC resource can be used within a coverage area of the base station without causing resource collision in a period of time after the VDC resource occupation information is received. For example, if VDC resource occupation information sent by a base station a to a base station b indicates that a VDC resource 1 is occupied and a travel direction is travel away from the base station b, after a period of time (for example, one second after the VDC resource occupation information is received) after the VDC resource occupation information is received, the base station b may allocate the VDC resource 1 to UE that is in a direction away from the base station a and just enters a coverage area of the base station b.

608. Send a VDC resource allocation indication message to the UE.

The VDC resource allocation indication message indicates the VDC resource allocated to the UE by the base station, so that the UE sends the vehicle service information by using the VDC resource indicated by the VDC resource allocation indication message.

A vehicle passes a cell in coverage of a base station in a relatively short time when the vehicle moves at a high speed. If all cells reallocate VDC resources, the VDC resource may be switched for excessively many times in a unit time (for example, one minute). Therefore, the base station expects that a vehicle at a high speed switches a VDC resource for as few times as possible. Therefore, optionally, in this embodiment of the present invention, the UE adds the travel information of the UE to the VDC resource request message. In addition to vehicle speed information of a vehicle on which the UE is located, the travel information of the UE further includes the geographical location information and the travel direction that are of the vehicle on which the UE is located. After allocating the available VDC resource to the UE in step 607, the base station further determines, according to the geographical location information and the travel direction that are of the vehicle on which the UE is located, a use range for using the VDC resource by the UE, and the use range specifically refers to duration in which the VDC resource can be used, that is, duration in which the VDC resource can be used after a VDC resource allocation instruction is received; or determines a condition for changing the VDC resource, for example, determines that the vehicle on which the UE is located needs to apply for a resource again after the UE arrives at a particular place. The base station adds, to the VDC resource allocation indication message sent to the UE, the use range of the VDC resource or the condition for changing the VDC resource, so that the UE initiates a VDC resource request to the base station again when a specified time expires or when the vehicle on which the UE is located satisfies the condition for changing the VDC resource (for example, the vehicle on which the UE is located arrives at a designated place).

Optionally, the base station sends the VDC resource allocation indication message to the UE by using a PDSCH.

It should be noted that, in an example of this embodiment of the present invention, the VDC resource request message carries the VDC resource status list and the travel information of the vehicle on which the UE is located. If the VDC resource request message does not carry the VDC resource status list, step 601 in this embodiment of the present invention may be omitted. In addition, step 604 in this embodiment of the present invention may also be omitted. That is, the base station may not determine a TA of the UE, and the access acknowledgment message sent in step 605 does not carry the TA of the UE. The UE may adjust a sending time point according to a downlink TA or an existing TA.

It should be noted that the UE in this embodiment of the present invention may be a vehicle-mounted terminal, a handheld terminal, or another terminal that can be connected to a vehicle control management system, and is not limited herein.

It may be learned from the foregoing technical solution of the present invention that, in the present invention, after receiving a VDC resource request message of UE, a base station allocates an available VDC resource to the UE according to the resource request message, and indicates the VDC resource to the UE by using a VDC resource allocation indication message, so that the UE sends, according to indication of the VDC resource allocation indication message, vehicle service information by using the VDC resource allocated by the base station. In an entire process, no complex link establishment process between the user equipment and the base station is required. Therefore, a vehicle service information transmission delay is effectively reduced. Moreover, experimental research data shows that a transmission delay can be less than 100 milliseconds when vehicle service information is transmitted according to the present invention, that is, a transmission delay requirement of a third type of vehicle service information can be satisfied.

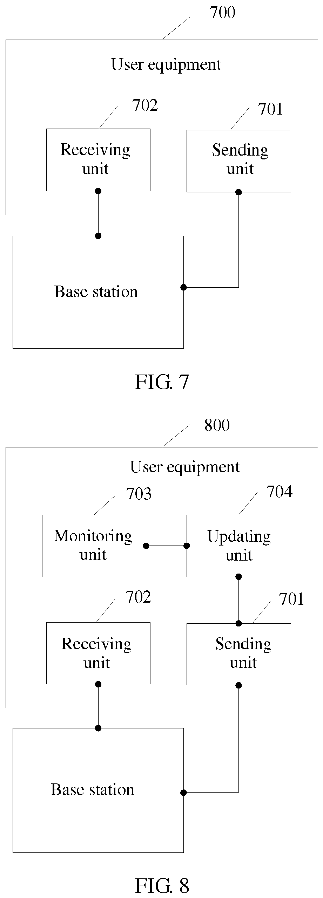

An embodiment of the present invention further provides user equipment. As shown in FIG. 7, user equipment 700 in this embodiment of the present invention includes:
a sending unit 701, configured to send a VDC resource request message to a base station when the user equipment 700 needs to request a VDC resource for sending vehicle service information, where the VDC resource request message includes at least one piece of the following information: a VDC resource status list, or travel information of the user equipment 700, and an available VDC resource is indicated in the VDC resource status list; optionally, the travel information includes one or more pieces of the following information: vehicle speed information of a vehicle on which the user equipment 700 is located, or geographical location information and a travel direction of a vehicle on which the user equipment 700 is located; and optionally, the VDC resource request message further includes an RNTI of the UE, and the RNTI is allocated to the UE by the base station when the UE is accessing a cellular network; and
a receiving unit 702, configured to receive a VDC resource allocation indication message from the base station, where the VDC resource allocation indication message indicates a VDC resource allocated to the user equipment 700 by the base station according to the VDC resource request message.

The sending unit 702 is further configured to send the vehicle service information by using the VDC resource indicated by the VDC resource allocation indication message.

In an application scenario, the VDC resource request message includes the VDC resource status list. Optionally, based on the embodiment shown in FIG. 7, as shown in FIG. 8, user equipment 800 further includes: a monitoring unit 703, configured to monitor a VDC resource use status; and an updating unit 704, configured to update a locally stored VDC resource status list when the monitoring unit 703 monitors a change of the VDC resource use status.

Optionally, the monitoring unit 703 includes: an obtaining unit, configured to obtain VDC resource parameter information that is broadcast by the base station, where the VDC resource parameter information includes VDC resource bandwidth, VDC resource channel division, and a channel parameter; and a monitoring subunit, configured to monitor the VDC resource use status according to the VDC resource parameter information obtained by the obtaining unit.

Optionally, the sending unit 701 is further configured to send a predetermined access preamble sequence to the base station before sending the VDC resource request message to the base station, so that the base station learns, according to the predetermined access preamble sequence, that the user equipment currently needs to apply for a VDC resource, and allocates an uplink grant value to the user equipment. The receiving unit 702 is further configured to receive an access acknowledgment message from the base station, and the access acknowledgment message includes the uplink grant value allocated to the user equipment by the base station. The sending unit 701 is specifically configured to send the VDC resource request message to the base station according to the uplink grant value in the access acknowledgment message. Optionally, after allocating the uplink grant value to the UE, the base station determines a TA of the UE, and adds the TA of the UE to the access acknowledgment message, so that the UE adjusts a sending time point according to the TA.

It should be noted that, in this embodiment of the present invention, VDC is a vehicle direct communication technology designed based on a physical layer of an LTE system, that is, VDC communication is direct communication between UE and UE. A feature of the VDC communication is as follows: A base station configures an independent VDC resource for each cell, and each user equipment (for example, a vehicle-mounted terminal or a handheld terminal) may obtain VDC resource parameter information by receiving a configuration message that is broadcast by the base station or by establishing a dedicated link to the base station. The VDC resource parameter information is, for example, total bandwidth of VDC resources within a coverage area of the base station, a time-frequency resource configuration parameter of a channel corresponding to each VDC resource, or a channel identifier (for example, a channel number) of a channel corresponding to a VDC resource that can be used by each UE. When sending a vehicle safety message, the user equipment needs to use only a VDC resource allocated to the UE by the base station. In addition, the user equipment needs to receive as many signals on the VDC resource as possible, so as to receive as many vehicle safety messages sent by other neighboring UE as possible. The vehicle safety message includes, for example, emergency brake information of a vehicle, or information prompting a coming vehicle at an opposite side when a vehicle is making a turn. The vehicle safety message is mainly used to avoid vehicle collision.

It should be noted that the user equipment in this embodiment of the present invention may be a vehicle-mounted terminal, a handheld terminal, or another terminal that can be connected to a vehicle control management system, and is not limited herein. The user equipment in this embodiment of the present invention may be the user equipment in the foregoing method embodiments, and may be configured to implement all technical solutions in the foregoing method embodiments. Functions of each function module of the user equipment may be specifically implemented according to the methods described in the foregoing method embodiments. For a specific implementation process, refer to the related descriptions in the foregoing embodiments. Details are not described herein.

It may be learned from the foregoing technical solution of the present invention that, in the present invention, user equipment sends a VDC resource request message to a base station when the user equipment needs to send vehicle service information (for example, when the user equipment needs to send a third type of vehicle service information that requires a small transmission delay), so that the base station allocates an available VDC resource to the user equipment according to the VDC resource request message. Then, the user equipment sends the vehicle service information by using the VDC resource allocated by the base station. In an entire process, no complex link establishment process between the user equipment and the base station is required. Therefore, a vehicle service information transmission delay is effectively reduced. Moreover, experimental research data shows that a transmission delay can be less than 100 milliseconds when vehicle service information is transmitted according to the present invention, that is, a transmission delay requirement of the third type of vehicle service information can be satisfied.

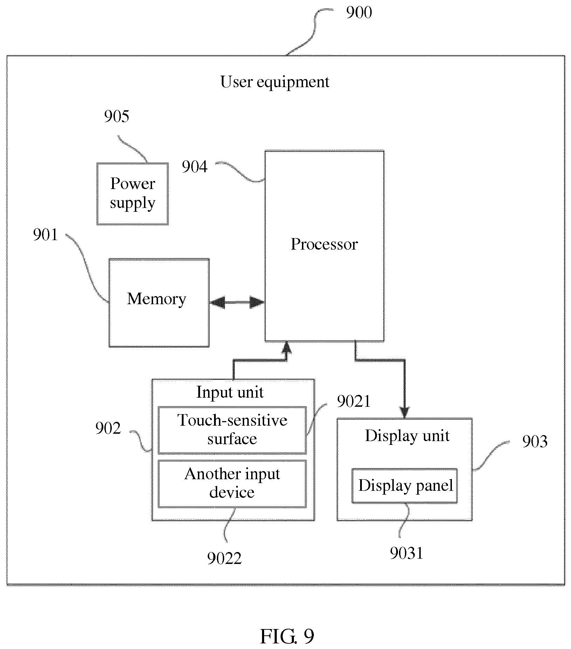

An example of the present invention provides another type of user equipment. The following describes the user equipment in this example of the present invention. As shown in FIG. 9, user equipment 900 in this example of the present invention includes parts such as a memory 901 of one or more computer-readable storage media, an input unit 902, a display unit 903, a processor 904 of one or more processing cores, and a power supply 905. Persons killed in the art may understand that a user equipment structure shown in FIG. 9 does not limit the user equipment, parts more or less than those shown in the figure may be included, some parts may be combined, or a different part configuration may be included.

The memory 901 may be configured to store a software program and a module, and the processor 904 executes various functional applications and data processing by running the software program and the module that are stored in the memory 901. The memory 901 may mainly include a program storage area and a data storage area. The program storage area may store an operating system, an application program required by at least one function (such as a sound play function or an image play function), and the like. The data storage area may store data (such as audio data or vehicle travel information) created according to use of the user equipment 900, and the like. In addition, the memory 901 may include a high-speed random access memory, and may further include a non-volatile memory, for example, at least one magnetic disk storage component, a flash memory component, or another volatile solid-state storage component. Correspondingly, the memory 901 may further include a memory controller, so as to provide the processor 904 and the input unit 902 with access to the memory 901.

The input unit 902 may be configured to: receive input digits or character information, and generate keyboard, mouse, joystick, optics, or trackball signal input related to user setting and function control. Specifically, the input unit 902 may be represented by a receiver. Optionally, the input unit 902 includes a touch-sensitive surface 9021 and another input device 9022. The touch-sensitive surface 9021, also referred to as a touchscreen or a touch panel, may collect a touch operation (such as an operation performed by a user on the touch-sensitive surface 9021 or near the touch-sensitive surface 9021 by using a finger, a stylus, or any another suitable object or accessory) of a user on or near the touch-sensitive surface, and drives a corresponding connection apparatus according to a preset program. Optionally, the touch-sensitive surface 9021 may include two parts: a touch detection apparatus and a touch controller. The touch detection apparatus detects a touch location of a user, detects a signal brought by a touch operation, and sends the signal to the touch controller. The touch controller receives touch information from the touch detection apparatus, converts the touch information into touch coordinates, and sends the touch coordinates to the processor 904, and can receive and execute a command sent by the processor 904. In addition, the touch-sensitive surface 9021 may be implemented in multiple types, such as resistance-type, capacitor-type, infrared ray, and surface acoustic wave. In addition to the touch-sensitive surface 9021, the input unit 902 may include another input device 9022. Specifically, the another input device 9022 may include but is not limited to one or more of a physical keyboard, a function key (such as a volume control key or an on/off key), a trackball, a mouse, a joystick, or the like.

The display unit 903 may be configured to display information input by a user, or information provided for a user, and various graphic user interfaces of the terminal 900. The graphic user interfaces may include a graphic, a text, an icon, a video, and any combination thereof. The display unit 903 may include a display panel 9031. Optionally, the display panel 9031 may be configured in a form such as a liquid crystal display (LCD, Liquid Crystal Display), or an organic light-emitting diode (OLED, Organic Light-Emitting Diode). Further, the touch-sensitive surface 9021 may cover the display panel 9031. When detecting the touch operation on or near the touch-sensitive surface 9021, the touch-sensitive surface 9021 transmits the touch operation to the processor 904 to determine a type of a touch event, and then the processor 904 provides corresponding visual output on the display panel 9031 according to the type of the touch event. In FIG. 9, the touch-sensitive surface 9021 and the display panel 9031 are used as two independent parts to implement input and output functions. However, in some examples, the touch-sensitive surface 9021 and the display panel 9031 may be integrated to implement the input and output functions.

The processor 904 is a control center of the user equipment 900, connects all parts of the entire mobile phone by using various interfaces and lines, executes, by running or executing the software program and/or the module stored in the memory 901 and by invoking data stored in the memory 901, various functions of the user equipment 900, and processes the data, so as to perform overall monitoring on the user equipment 900. Optionally, the processor 904 may include one or more processing cores. Preferably, an application processor and a modem processor may be integrated into the processor 904. The application processor mainly processes an operating system, a user interface, an application program, and the like, and the modem processor mainly processes wireless communications. Certainly, the modem processor may not be integrated into the processor 904.

The user equipment 900 further includes the power supply 905 (for example, a battery) that supplies power to each part. Preferably, the power supply may be logically connected to the processor 904 by using a power supply management system, so as to manage charging, discharging, and power consumption by using the power supply management system. The power supply 905 may include one or more direct current or alternating current power supplies, a rechargeable system, a power failure detection circuit, a power converter or an inverter, a power status indicator, or any another component.

Although not shown, the user equipment 900 may further include a transmitter (such as a radio frequency (RF, Radio Frequency) circuit), a sensor, an audio frequency circuit, a wireless fidelity (WiFi, wireless fidelity) module, a camera, a Bluetooth module, and the like. Details are not described herein. Specifically, in this example, the user equipment 900 further includes one or more programs that are stored in the memory 901 and configured to be executed by one or more processors 904. The one or more programs include an instruction used to perform the following operations.

A VDC resource request message is sent to a base station when the user equipment 900 needs to request a VDC resource for sending vehicle service information. The VDC resource request message includes at least one piece of the following information: the VDC resource status list, or travel information of the user equipment 900, and an available VDC resource is indicated in the VDC resource status list. Optionally, the travel information includes at least one piece of the following information: vehicle speed information of a vehicle on which the user equipment 900 is located, or geographical location information and a travel direction of a vehicle on which the user equipment 700 is located.

A VDC resource allocation indication message from the base station is received. The VDC resource allocation indication message indicates a VDC resource allocated to the user equipment 900 by the base station according to the VDC resource request message.

The vehicle service information is sent by using the VDC resource indicated by the VDC resource allocation indication message.

It is assumed that the foregoing description is a first possible implementation manner. In a second possible implementation manner provided based on the first possible implementation manner, the VDC resource request message includes the VDC resource status list, and the processor 904 is further configured to perform the following instructions:
monitoring a VDC resource use status; and
when a change of the VDC resource use status is monitored, updating the VDC resource status list stored in the memory 901.

In a third possible implementation manner provided based on the second possible implementation manner, the monitoring a VDC resource use status includes: VDC resource parameter information that is broadcast by the base station is obtained, where the VDC resource parameter information includes VDC resource bandwidth, VDC resource channel division, and a channel parameter; and the VDC resource use status is monitored according to the obtained VDC resource parameter information.

In a fourth possible implementation manner provided based on the first possible implementation manner, the second possible implementation manner, or the third possible implementation manner, before sending the VDC resource request message, the user equipment 900 sends a predetermined access preamble sequence to the base station, so that the base station learns, according to the predetermined access preamble sequence, that the user equipment 900 currently needs to apply for a VDC resource, and allocates an uplink grant value to the user equipment 900; and receives an access acknowledgment message from the base station. The access acknowledgment message includes the uplink grant value allocated to the user equipment 900 by the base station.

The sending a VDC resource request message to a base station is specifically: The VDC resource request message is sent to the base station according to the uplink grant value in the access acknowledgment message.

It should be noted that the user equipment in this example of the present invention may be a vehicle-mounted terminal, a handheld terminal, or another terminal that can be connected to a vehicle control management system, and is not limited herein. The user equipment in this example of the present invention may be the user equipment in the foregoing method examples, and may be configured to implement all technical solutions in the foregoing method examples. Functions of each function module of the user equipment may be specifically implemented according to the methods described in the foregoing method examples. For a specific implementation process, refer to the related descriptions in the foregoing examples. Details are not described herein.

It may be learned from the foregoing technical solution of the present invention that, in the present invention, user equipment sends a VDC resource request message to a base station when the user equipment needs to send vehicle service information (for example, when the user equipment needs to send a third type of vehicle service information that requires a small transmission delay), so that the base station allocates an available VDC resource to the user equipment according to the VDC resource request message. Then, the user equipment sends the vehicle service information by using the VDC resource allocated by the base station. In an entire process, no complex link establishment process between the user equipment and the base station is required. Therefore, a vehicle service information transmission delay is effectively reduced. Moreover, experimental research data shows that a transmission delay can be less than 100 milliseconds when vehicle service information is transmitted according to the present invention, that is, a transmission delay requirement of the third type of vehicle service information can be satisfied.

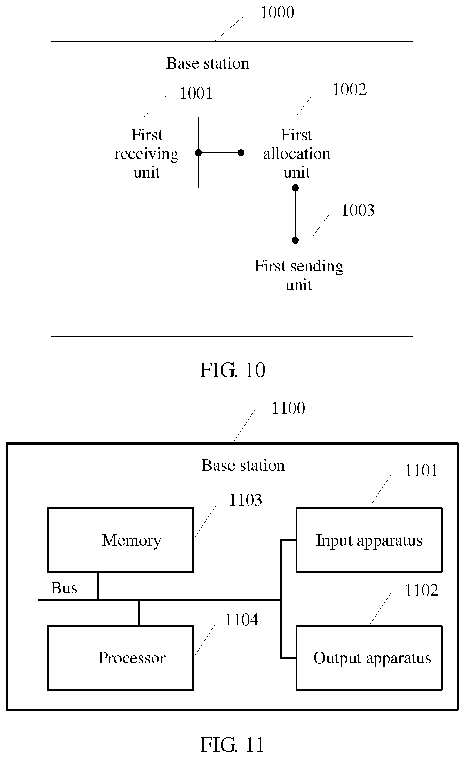

An embodiment of the present invention further provides a base station. As shown in FIG. 10, a base station 1000 in this embodiment of the present invention includes: a first receiving unit 1001, configured to receive a VDC resource request message from user equipment, where the VDC resource request message includes at least one piece of the following information: a VDC resource status list, or travel information of the user equipment, and an available VDC resource is indicated in the VDC resource status list; and optionally, the travel information includes at least one piece of the following information: vehicle speed information of a vehicle on which the user equipment 700 is located, or geographical location information and a travel direction of a vehicle on which the user equipment 700 is located;
a first allocation unit 1002, configured to allocate a currently available VDC resource to the user equipment according to the VDC resource request message of the user equipment received by the first receiving unit 1001; and
a first sending unit 1003, configured to send a VDC resource allocation indication message to the user equipment, where the VDC resource allocation indication message indicates the VDC resource allocated to the user equipment by the first allocation unit 1002, so that the user equipment sends vehicle service information by using the VDC resource indicated by the VDC resource allocation indication message.

Optionally, based on the embodiment shown in FIG. 10, the VDC resource request message includes the VDC resource status list. The base station in this embodiment of the present invention further includes a broadcasting unit, configured to broadcast VDC resource parameter information to user equipment within a coverage area of the base station. The VDC resource parameter information includes VDC resource bandwidth, VDC resource channel division, and a channel parameter.

Optionally, the VDC resource request message includes the travel information of the user equipment, and the travel information includes the vehicle speed information of the vehicle on which the user equipment is located. The first allocation unit 1002 is specifically configured to: determine a VDC resource range according to a vehicle speed interval of the vehicle speed information of the vehicle on which the user equipment is located, and allocate the currently available VDC resource in the determined VDC resource range to the user equipment. There is a correspondence between the vehicle speed interval and the VDC resource range.

Optionally, the base station in this embodiment of the present invention further includes a second receiving unit, configured to receive VDC resource occupation indication information from a neighboring base station, where the VDC resource occupation indication information of the neighboring base station is used to indicate an occupied VDC resource within a coverage area of the neighboring base station. The first allocation unit 1002 is specifically configured to allocate the currently available VDC resource to the user equipment according to the VDC resource request message of the user equipment and the VDC resource occupation indication information of the neighboring base station.

Optionally, the base station in this embodiment of the present invention further includes: a third receiving unit, configured to receive an access preamble sequence of the user equipment; a second allocation unit, configured to allocate an uplink grant value to the user equipment when it is determined that the access preamble sequence is a predetermined access preamble sequence; a determining unit, configured to determine a time advance of the user equipment; and a second sending unit, configured to send an access acknowledgment message to the user equipment, where the access acknowledgment message includes the time advance of the user equipment and the uplink grant value allocated to the user equipment by the base station.

Optionally, the access preamble sequence of the user equipment is further used to indicate a quantity of bytes that are sent at the request of the user equipment. The second allocation unit is specifically configured to allocate, to the user equipment according to the access preamble sequence of the user equipment received by the third receiving unit, an uplink grant value greater than or equal to the quantity of bytes that are sent at the request of the user equipment.

It should be noted that the base station in this embodiment of the present invention may be the base station in the foregoing method embodiments, and may be configured to implement all technical solutions in the foregoing method embodiments. Functions of each function module may be specifically implemented according to the methods in the foregoing method embodiments. For a specific implementation process, refer to the related descriptions in the foregoing embodiments. Details are not described herein.

It may be learned from the foregoing technical solution of the present invention that, in the present invention, after receiving a VDC resource request message of user equipment, a base station allocates an available VDC resource to the user equipment according to the resource request message, and indicates the VDC resource to the user equipment by using a VDC resource allocation indication message, so that the user equipment sends, according to indication of the VDC resource allocation indication message, vehicle service information by using the VDC resource allocated by the base station. In an entire process, no complex link establishment process between the user equipment and the base station is required. Therefore, a vehicle service information transmission delay is effectively reduced. Moreover, experimental research data shows that a transmission delay can be less than 100 milliseconds when vehicle service information is transmitted according to the present invention, that is, a transmission delay requirement of a third type of vehicle service information can be satisfied.

The following describes another base station in an example of the present invention. Referring to FIG. 11, a base station 1100 in this example of the present invention includes:
an input apparatus 1101 (for example, a receiver), an output apparatus 1102 (for example, a transmitter), a memory 1103, and a processor 1104 (the base station 1100 may include one or more processors 1104, and one processor is used as an example in FIG. 11). In some examples of the present invention, the input apparatus 1101, the output apparatus 1102, the memory 1103, and the processor 1104 may be connected by using a bus or in another manner, and connection by using a bus is used as an example in FIG. 11. The memory 1103 is configured to store data input by the input apparatus 1101, and may further store information such as essential files used in data processing of the processor 1104. The input apparatus 1101 and the output apparatus 1102 may include a port used for communication between the base station 1100 and another device. In this example, the port that is used for communication with another device and that is between the input apparatus 1101 and the output apparatus 1102 may be an antenna and/or a cable.

The processor 1104 performs the following steps:
receiving a VDC resource request message from UE, where the VDC resource request message includes at least one piece of the following information: a VDC resource status list, or travel information of the UE, and an available VDC resource is indicated in the VDC resource status list; and optionally, the travel information includes at least one piece of the following information: vehicle speed information of a vehicle on which the UE is located, or geographical location information and a travel direction of a vehicle on which the UE is located;
allocating a currently available VDC resource to the UE according to the VDC resource request message of the UE; and
sending a VDC resource allocation indication message to the UE, where the VDC resource allocation indication message indicates the VDC resource allocated to the UE by the processor 1104, so that the UE sends vehicle service information by using the VDC resource indicated by the VDC resource allocation indication message.

It should be noted that the base station in this example of the present invention may be the base station in the foregoing method examples, and may be configured to implement all technical solutions in the foregoing method examples. Functions of each function module may be specifically implemented according to the methods in the foregoing method examples. For a specific implementation process, refer to the related descriptions in the foregoing examples. Details are not described herein.

It may be learned from the foregoing technical solution of the present invention that, in the present invention, after receiving a VDC resource request message of user equipment, a base station allocates an available VDC resource to the user equipment according to the resource request message, and indicates the VDC resource to the user equipment by using a VDC resource allocation indication message, so that the user equipment sends, according to indication of the VDC resource allocation indication message, vehicle service information by using the VDC resource allocated by the base station. In an entire process, no complex link establishment process between the user equipment and the base station is required. Therefore, a vehicle service information transmission delay is effectively reduced. Moreover, experimental research data shows that a transmission delay can be less than 100 milliseconds when vehicle service information is transmitted according to the present invention, that is, a transmission delay requirement of a third type of vehicle
service information can be satisfied.

In the several embodiments provided in the present application, it should be understood that the disclosed apparatus and method may be implemented in other manners. For example, the described apparatus embodiment is merely an example. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, that is, may be located in one position, or may be distributed on multiple network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

It should be noted that, for a brief description, the foregoing method embodiments are represented as a series of actions. However, persons skilled in the art should appreciate that the present invention is not limited to the described order of the actions, because according to the present invention, some steps may be performed in another order or simultaneously. In addition, persons skilled in the art should also understand that the embodiments described in this specification are examples, and the involved actions and modules are not necessarily mandatory to the present invention.

In the foregoing embodiments, the description of each embodiment has respective focuses. For a part that is not described in detail in an embodiment, refer to related descriptions in other embodiments.

A VDC resource request method, user equipment, and a base station that are provided in the present invention are described above, and persons of ordinary skill in the art may make modifications to a specific implementation manner and an application scope according to the idea of the present invention. In conclusion, content of this specification should not be understood as a limitation to the present invention.

## Claims

1. A vehicle direct communication, VDC, resource request method, comprising:
sending (405), by user equipment, a VDC resource request message to a base station when the user equipment needs to request a VDC resource for sending vehicle service information, wherein the VDC resource request message comprises at least one piece of the following information: a VDC resource status list, or travel information of the user equipment, and an available VDC resource is indicated in the VDC resource status list;
receiving (406), by the user equipment, a VDC resource allocation indication message from the base station, wherein the VDC resource allocation indication message indicates a VDC resource allocated to the user equipment by the base station according to the VDC resource request message; and
sending (407), by the user equipment, the vehicle service information by using the VDC resource indicated by the VDC resource allocation indication message;
**characterized in that** before the sending (405), by the user equipment, the VDC resource request message to the base station, the method comprising:
sending (403), by the user equipment, a predetermined access preamble sequence to the base station, so that the base station learns, according to the predetermined access preamble sequence, that the user equipment currently needs to apply for the VDC resource, and allocates an uplink grant value to the user equipment for use for requesting the VDC resource; and
receiving (404) an access acknowledgment message from the base station, wherein the access acknowledgment message comprises the uplink grant value allocated to the user equipment by the base station; wherein
the sending (405), by the user equipment, the VDC resource request message to the base station includes:
sending, by the user equipment, the VDC resource request message to the base station according to the uplink grant value in the access acknowledgment message.

2. The method according to claim 1, wherein the VDC resource request message comprises the VDC resource status list; and
the method further comprises:
monitoring, by the user equipment, a VDC resource use status; and
updating, by the user equipment, a locally stored VDC resource status list when detecting a change of the VDC resource use status.

3. The method according to claim 2, wherein the monitoring, by the user equipment, the VDC resource use status comprises:
obtaining VDC resource parameter information that is broadcasted by the base station, wherein the VDC resource parameter information comprises VDC resource bandwidth, VDC resource channel division, and a channel parameter; and
monitoring the VDC resource use status according to the obtained VDC resource parameter information.

4. A vehicle direct communication, VDC, resource request method, comprising:
receiving (606), by a base station, a VDC resource request message from user equipment, wherein the VDC resource request message comprises at least one piece of the following information: a VDC resource status list, or travel information of the user equipment, and an available VDC resource is indicated in the VDC resource status list;
allocating (607), by the base station, a currently available VDC resource to the user equipment according to the VDC resource request message of the user equipment; and
sending (608), by the base station, a VDC resource allocation indication message to the user equipment, wherein the VDC resource allocation indication message indicates the VDC resource allocated to the user equipment by the base station, so that the user equipment sends vehicle service information by using the VDC resource indicated by the VDC resource allocation indication message;
**characterized in that** before the receiving (606) the VDC resource request message from the user equipment, the method comprising:
receiving (602), by the base station, an access preamble sequence of the user equipment;
allocating (603), by the base station, an uplink grant value to the user equipment for use for requesting the VDC resource when it is determined that the access preamble sequence is a predetermined access preamble sequence;
sending (605), by the base station, an access acknowledgment message to the user equipment, where the access acknowledgment message includes the uplink grant value allocated to the user equipment by the base station; and
sending, by the user equipment, the VDC resource request message to the base station according to the uplink grant value in the access acknowledgment message.

5. The method according to claim 4, wherein the VDC resource request message comprises the VDC resource status list; and
before the receiving the VDC resource request message from the user equipment, the method further comprises:
broadcasting, by the base station, VDC resource parameter information to the user equipment within a coverage area of the base station, wherein the VDC resource parameter information comprises VDC resource bandwidth, VDC resource channel division, and a channel parameter.

6. The method according to claim 4, wherein the VDC resource request message comprises the travel information of the user equipment, and the travel information comprises vehicle speed information of a vehicle on which the user equipment is located; and
the allocating the currently available VDC resource to the user equipment according to the VDC resource request message of the user equipment comprises:
determining, by the base station, a VDC resource range according to a vehicle speed interval of the vehicle speed information of the vehicle on which the user equipment is located, wherein there is a correspondence between the vehicle speed interval and the VDC resource range; and
allocating, by the base station, the currently available VDC resource in the determined VDC resource range to the user equipment.

7. The method according to any one of claims 4 to 6, wherein the method further comprises:
receiving, by the base station, VDC resource occupation indication information from a neighboring base station, wherein the VDC resource occupation indication information of the neighboring base station is used to indicate an occupied VDC resource within a coverage area of the neighboring base station; and
the allocating the currently available VDC resource to the user equipment according to the VDC resource request message of the user equipment comprises:
allocating, by the base station, the currently available VDC resource to the user equipment according to the VDC resource request message of the user equipment and the VDC resource occupation indication information of the neighboring base station.

8. User equipment (700), comprising:
a sending unit (701), configured to send a vehicle direct communication, VDC, resource request message to a base station when the user equipment needs to request a VDC resource for sending vehicle service information, wherein the VDC resource request message comprises at least one piece of the following information: a VDC resource status list, or travel information of the user equipment, and an available VDC resource is indicated in the VDC resource status list; and
a receiving unit (702), configured to receive a VDC resource allocation indication message from the base station, wherein the VDC resource allocation indication message indicates a VDC resource allocated to the user equipment by the base station according to the VDC resource request message; wherein
the sending unit (701) is further configured to send the vehicle service information by using the VDC resource indicated by the VDC resource allocation indication message;
**characterized in that**:
the sending unit (701) is further configured to send a predetermined access preamble sequence to the base station before sending the VDC resource request message to the base station, so that the base station learns, according to the predetermined access preamble sequence, that the user equipment currently needs to apply for the VDC resource, and allocates an uplink grant value to the user equipment for use for requesting the VDC resource;
the receiving unit (702) is further configured to receive an access acknowledgment message from the base station, and the access acknowledgment message comprises the uplink grant value allocated to the user equipment by the base station; and
wherein the sending unit (701) is configured to send the VDC resource request message to the base station according to the uplink grant value in the access acknowledgment message.

9. The user equipment according to claim 8, wherein the VDC resource request message comprises the VDC resource status list; and
the user equipment further comprises:
a monitoring unit (703), configured to monitor a vehicle direct communication VDC resource use status; and
an updating unit (704), configured to update a locally stored VDC resource status list when the monitoring unit monitors a change of the VDC resource use status.

10. The user equipment according to claim 9, wherein the monitoring unit comprises:
an obtaining unit, configured to obtain VDC resource parameter information that is broadcasted by the base station, wherein the VDC resource parameter information comprises VDC resource bandwidth, VDC resource channel division, and a channel parameter; and
a monitoring subunit, configured to monitor the VDC resource use status according to the VDC resource parameter information obtained by the obtaining unit.

11. Abase station (1000), comprising:
a first receiving unit (1001), configured to receive a vehicle direct communication, VDC, resource request message from user equipment, wherein the VDC resource request message comprises at least one piece of the following information: a VDC resource status list, or travel information of the user equipment, and an available VDC resource is indicated in the VDC resource status list;
a first allocation unit (1002), configured to allocate a currently available VDC resource to the user equipment according to the VDC resource request message of the user equipment received by the first receiving unit; and
a first sending unit (1003), configured to send a VDC resource allocation indication message to the user equipment, wherein the VDC resource allocation indication message indicates the VDC resource allocated to the user equipment by the first allocation unit, so that the user equipment sends vehicle service information by using the VDC resource indicated by the VDC resource allocation indication message;
**characterized in that** the base station further includes:
a third receiving unit, configured to receive an access preamble sequence of the user equipment;
a second allocation unit, configured to allocate an uplink grant value to the user equipment for use for requesting the VDC resource when it is determined that the access preamble sequence is a predetermined access preamble sequence; and
a second sending unit, configured to send an access acknowledgment message to the user equipment, where the access acknowledgment message includes the uplink grant value allocated to the user equipment by the base station;
wherein the VDC resource request message is sent by the user equipment to the base station according to the uplink grant value in the access acknowledgment message.

12. The base station according to claim 11, wherein the VDC resource request message comprises the VDC resource status list; and
the base station further comprises:
a broadcasting unit, configured to broadcast VDC resource parameter information to the user equipment within a coverage area of the base station, wherein the VDC resource parameter information comprises VDC resource bandwidth, VDC resource channel division, and a channel parameter.

13. The base station according to claim 11, wherein the VDC resource request message comprises the travel information of the user equipment, and the travel information comprises vehicle speed information of a vehicle on which the user equipment is located; and
the first allocation unit is specifically configured to: determine a VDC resource range according to a vehicle speed interval of the vehicle speed information of the vehicle on which the user equipment is located, and allocate the currently available VDC resource in the determined VDC resource range to the user equipment, wherein there is a correspondence between the vehicle speed interval and the VDC resource range.

14. A computer-readable storage medium comprising instructions which, when executed by a computer, cause the computer to carry out the method of any one of the claims 1 to 7.

## Patentansprüche

1. VDC-Ressourcenanforderungsverfahren (VDC = "Vehicle Direct Communication"), umfassend:
Senden (405) einer VDC-Ressourcenanforderungsnachricht durch ein Benutzergerät an eine Basisstation, wenn das Benutzergerät eine VDC-Ressource zum Senden von Fahrzeugserviceinformationen anfordern muss, wobei die VDC-Ressourcenanforderungsnachricht mindestens eine der folgenden Informationen umfasst: eine VDC-Ressourcenstatusliste oder Fahrinformationen des Benutzergeräts, und eine verfügbare VDC-Ressource ist in der VDC-Ressourcenstatusliste angegeben;
Empfangen (406) einer VDC-Ressourcenzuweisungsangabenachricht von der Basisstation durch das Benutzergerät, wobei die VDC-Ressourcenzuweisungsangabenachricht eine VDC-Ressource angibt, die dem Benutzergerät von der Basisstation gemäß der VDC-Ressourcenanforderungsnachricht zugewiesen wird; und
Senden (407) der Fahrzeugserviceinformationen durch das Benutzergerät unter Verwendung der VDC-Ressource, die durch die VDC-Ressourcenzuweisungsangabenachricht angegeben wird;
**dadurch gekennzeichnet, dass** vor dem Senden (405) der VDC-Ressourcenanforderungsnachricht an die Basisstation durch das Benutzergerät das Verfahren umfasst:
Senden (403) einer vorbestimmten Zugriffspräambelsequenz durch das Benutzergerät an die Basisstation, so dass die Basisstation gemäß der vorbestimmten Zugriffspräambelsequenz lernt, dass das Benutzergerät derzeit die VDC-Ressource beantragen muss, und dem Benutzergerät einen Uplink-Gewährungswert zur Verwendung für eine Anforderung der VDC-Ressource zuweist; und
Empfangen (404) einer Zugriffsbestätigungsnachricht von der Basisstation, wobei die Zugriffsbestätigungsnachricht den von der Basisstation dem Benutzergerät zugewiesenen Uplink-Gewährungswert umfasst; wobei
das Senden (405) der VDC-Ressourcenanforderungsnachricht an die Basis durch das Benutzergerät beinhaltet:
Senden der VDC-Ressourcenanforderungsnachricht durch das Benutzergerät an die Basisstation gemäß dem Uplink-Gewährungswert in der Zugriffsbestätigungsnachricht.

2. Verfahren nach Anspruch 1, wobei die VDC-Ressourcenanforderungsnachricht die VDC-Ressourcenstatusliste umfasst; und
das Verfahren ferner umfasst:
Überwachen eines VDC-Ressourcenverwendungsstatus durch das Benutzergerät; und
Aktualisieren einer lokal gespeicherten VDC-Ressourcenstatusliste durch das Benutzergerät, wenn eine Änderung des VDC-Ressourcenverwendungsstatus festgestellt wird.

3. Verfahren nach Anspruch 2, wobei das Überwachen des VDC-Ressourcenverwendungsstatus durch das Benutzergerät umfasst:
Erhalten von VDC-Ressourcenparameterinformationen, die von der Basisstation übertragen werden, wobei die VDC-Ressourcenparameterinformationen VDC-Ressourcenbandbreite, VDC-Ressourcenkanalteilung und einen Kanalparameter umfassen; und
Überwachen des VDC-Ressourcenverwendungsstatus gemäß den erhaltenen VDC-Res sourcenparameterinformationen.

4. VDC-Ressourcenanforderungsverfahren (VDC = "Vehicle Direct Communication"), umfassend:
Empfangen (606) einer VDC-Ressourcenanforderungsnachricht von einem Benutzergerät durch eine Basisstation, wobei die VDC-Ressourcenanforderungsnachricht mindestens eine der folgenden Informationen umfasst: eine VDC-Ressourcenstatusliste oder Fahrinformationen des Benutzergeräts, und eine verfügbare VDC-Ressource ist in der VDC-Ressourcenstatusliste angegeben;
Zuweisen (607) einer aktuell verfügbaren VDC-Ressource an das Benutzergerät durch die Basisstation gemäß der VDC-Ressourcenanforderungsnachricht des Benutzergeräts; und
Senden (608) einer VDC-Ressourcenzuweisungsangabenachricht an das Benutzergerät durch die Basisstation, wobei die VDC-Ressourcenzuweisungsangabenachricht die VDC-Ressource angibt, die dem Benutzergerät durch die Basisstation zugewiesen ist, so dass das Benutzergerät Fahrzeugserviceinformationen unter Verwendung der VDC-Ressource sendet, die durch die VDC-Ressourcenzuweisungsangabenachricht angegeben ist;
**dadurch gekennzeichnet, dass** vor dem Empfangen (606) der VDC-Ressourcenanforderungsnachricht von dem Benutzergerät, das Verfahren umfasst:
Empfangen (602) einer Zugriffspräambelsequenz des Benutzergeräts durch die Basisstation;
Zuweisen (603) eines Uplink-Gewährungswertes an das Benutzergerät durch die Basisstation zur Verwendung für eine Anforderung der VDC-Ressource, wenn bestimmt wird, dass die Zugriffspräambelsequenz eine vorbestimmte Zugriffspräambelsequenz ist;
Senden (605) einer Zugriffsbestätigungsnachricht an das Benutzergerät durch die Basisstation, wobei die Zugriffsbestätigungsnachricht den von der Basisstation dem Benutzergerät zugewiesenen Uplink-Gewährungswert beinhaltet; und
Senden der VDC-Ressourcenanforderungsnachricht durch das Benutzergerät an die Basisstation gemäß dem Uplink-Gewährungswert in der Zugriffsbestätigungsnachricht.

5. Verfahren nach Anspruch 4, wobei die VDC-Ressourcenanforderungsnachricht die VDC-Ressourcenstatusliste umfasst; und
vor dem Empfangen der VDC-Ressourcenanforderungsnachricht von dem Benutzergerät, das Verfahren ferner umfasst:
Übertragen von VDC-Ressourcenparameterinformationen an das Benutzergerät innerhalb eines Versorgungsgebiets der Basisstation durch die Basisstation, wobei die VDC-Ressourcenparameterinformationen VDC-Ressourcenbandbreite, VDC-Ressourcenkanalteilung und einen Kanalparameter umfassen.

6. Verfahren nach Anspruch 4, wobei die VDC-Ressourcenanforderungsnachricht die Fahrinformationen des Benutzergeräts umfasst, und die Fahrinformationen Fahrzeuggeschwindigkeitsinformationen eines Fahrzeugs umfassen, auf dem sich das Benutzergerät befindet; und
das Zuweisen der aktuell verfügbaren VDC-Ressource zu dem Benutzergerät gemäß der VDC-Ressourcenanforderungsnachricht des Benutzergeräts umfasst:
Bestimmen eines VDC-Ressourcenbereichs durch die Basisstation gemäß einem Fahrzeuggeschwindigkeitsintervall der Fahrzeuggeschwindigkeitsinformationen des Fahrzeugs, auf dem sich das Benutzergerät befindet, wobei eine Übereinstimmung zwischen dem Fahrzeuggeschwindigkeitsintervall und dem VDC-Ressourcenbereich besteht; und
Zuweisen der aktuell verfügbaren VDC-Ressource im bestimmten VDC-Ressourcenbereich durch die Basisstation an das Benutzergerät.

7. Verfahren nach einem der Ansprüche 4 bis 6 wobei das Verfahren ferner umfasst:
Empfangen von VDC-Ressourcenbelegungsangabeinformationen von einer benachbarten Basisstation durch die Basisstation, wobei die VDC-Ressourcenbelegungsangabeinformationen der benachbarten Basisstation verwendet werden, um eine belegte VDC-Ressource in einem Versorgungsgebiet der benachbarten Basisstation anzugeben; und
das Zuweisen der aktuell verfügbaren VDC-Ressource zu dem Benutzergerät gemäß der VDC-Ressourcenanforderungsnachricht des Benutzergeräts umfasst:
Zuweisen der aktuell verfügbaren VDC-Ressource an das Benutzergerät durch die Basisstation gemäß der VDC-Ressourcenanforderungsnachricht des Benutzergeräts und der VDC-Ressourcenbelegungsangabeinformationen der benachbarten Basisstation.

8. Benutzergerät (700), umfassend:
eine Sendeeinheit (701), die zum Senden einer VDC-Ressourcenanforderungsnachricht (VDC = "Vehicle Direct Communication") an eine Basisstation konfiguriert ist, wenn das Benutzergerät eine VDC-Ressource zum Senden von Fahrzeugserviceinformationen anfordern muss, wobei die VDC-Ressourcenanforderungsnachricht mindestens eine der folgenden Informationen umfasst: eine VDC-Ressourcenstatusliste oder Fahrinformationen des Benutzergeräts, und eine verfügbare VDC-Ressource wird in der VDC-Ressourcenstatusliste angegeben; und
eine Empfangseinheit (702), die zum Empfangen einer VDC-Ressourcenzuweisungsangabenachricht von der Basisstation konfiguriert ist, wobei die VDC-Ressourcenzuweisungsangabenachricht eine VDC-Ressource angibt, die dem Benutzungsgerät von der Basisstation gemäß der VDC-Ressourcenanforderungsnachricht zugewiesen wurde; wobei
die Sendeeinheit (701) ferner zum Senden der Fahrzeugserviceinformationen unter Verwendung der VDC-Ressource konfiguriert ist, die durch die VDC-Ressourcenzuweisungsangabenachricht angegeben wird; **dadurch gekennzeichnet, dass**:
die Sendeeinheit (701) ferner zum Senden einer vorbestimmten Zugriffspräambelsequenz an die Basisstation konfiguriert ist, bevor die VDC-Ressourcenanforderungsnachricht an die Basisstation gesendet wird, so dass die Basisstation gemäß der vorbestimmten Zugriffspräambelsequenz lernt, dass das Benutzergerät aktuell die VDC-Ressource beantragen muss, und das Benutzergerät einen Uplink-Gewährungswert zur Verwendung für eine Anforderung der VDC-Ressource zuweist;
die Empfangseinheit (702) ferner zum Empfangen einer Zugriffsbestätigungsnachricht von der Basisstation konfiguriert ist, und die Zugriffsbestätigungsnachricht den Uplink-Gewährungswert umfasst, der dem Benutzergerät durch die Basisstation zugewiesen wird; und
wobei die Sendeeinheit (701) zum Senden der VDC-Ressourcenanforderungsnachricht an die Basisstation gemäß dem Uplink-Gewährungswert in der Zugriffsbestätigungsnachricht konfiguriert ist.

9. Benutzergerät nach Anspruch 8, wobei die VDC-Ressourcenanforderungsnachricht die VDC-Ressourcenstatusliste umfasst; und
das Benutzergerät ferner umfasst:
eine Überwachungseinheit (703), die zum Überwachen eines VDC-Ressourcenverwendungsstatus (VDC = Vehicle Direct Communication) konfiguriert ist; und
eine Aktualisierungseinheit (704), die zum Aktualisieren einer lokal gespeicherten VDC-Ressourcenstatusliste konfiguriert ist, wenn die Überwachungseinheit eine Änderung des VDC-Ressourcenverwendungsstatus überwacht.

10. Benutzergerät nach Anspruch 9, wobei die Überwachungseinheit umfasst:
eine Erhaltenseinheit, die zum Erhalten von VDC-Ressourcenparameterinformationen konfiguriert ist, die von der Basisstation übertragen werden, wobei die VDC-Ressourcenparameterinformationen VDC-Ressourcenbandbreite, VDC-Ressourcenkanalteilung und einen Kanalparameter umfassen; und
eine Überwachungs-Untereinheit, die zum Überwachen des VDC-Ressourcenverwendungsstatus gemäß den VDC-Ressourcenparameterinformationen konfiguriert ist, die von der Erhaltenseinheit erhalten werden.

11. Basisstation (1000), umfassend:
eine erste Empfangseinheit (1001), die zum Empfangen einer VDC-Ressourcenanforderungsnachricht (VDC = "Vehicle Direct Communication") von einem Benutzergerät konfiguriert ist, wobei die VDC-Ressourcenanforderungsnachricht mindestens eine der folgenden Informationen umfasst: eine VDC-Ressourcenstatusliste oder Fahrinformationen des Benutzergeräts, und eine verfügbare VDC-Ressource wird in der VDC-Ressourcenstatusliste angezeigt;
eine erste Zuweisungseinheit (1002), die zum Zuweisen einer aktuell verfügbaren VDC-Ressource zu dem Benutzergerät gemäß der VDC-Ressourcenanforderungsnachricht des Benutzergeräts, die von der ersten Empfangseinheit empfangen wird, konfiguriert ist; und
eine erste Sendeeinheit (1003), die zum Senden einer VDC-Ressourcenzuweisungsangabenachricht an das Benutzergerät konfiguriert ist, wobei die VDC-Ressourcenzuweisungsangabenachricht die VDC-Ressource angibt, die dem Benutzergerät durch die erste Zuweisungseinheit zugewiesen wurde, so dass das Benutzergerät Fahrzeugserviceinformationen unter Verwendung der VDC-Ressource sendet, die durch die VDC-Ressourcenzuweisungsangabenachricht angegeben wird;
**dadurch gekennzeichnet, dass** die Basisstation ferner beinhaltet:
eine dritte Empfangseinheit, die zum Empfangen einer Zugriffspräambelsequenz des Benutzergeräts konfiguriert ist;
eine zweite Zuweisungseinheit, die zum Zuweisen eines Uplink-Gewährungswertes an das Benutzergerät zur Verwendung für eine Anforderung der VDC-Ressource konfiguriert ist, wenn bestimmt wird, dass die Zugriffspräambelsequenz eine vorbestimmte Zugriffspräambelsequenz ist; und
eine zweite Sendeeinheit, die zum Senden einer Zugriffsbestätigungsnachricht an das Benutzergerät konfiguriert ist, wobei die Zugriffsbestätigungsnachricht den von der Basisstation dem Benutzergerät zugewiesenen Uplink-Gewährungswert beinhaltet;
wobei die VDC-Ressourcenanforderungsnachricht von dem Benutzergerät an die Basisstation gemäß dem Uplink-Gewährungswert in der Zugriffsbestätigungsnachricht gesendet wird.

12. Basisstation nach Anspruch 11, wobei die VDC-Ressourcenanforderungsnachricht die VDC-Ressourcenstatusliste umfasst; und
die Basisstation ferner umfasst:
eine Übertragungseinheit, die zum Übertragen von VDC-Ressourcenparameterinformationen an das Benutzergerät innerhalb eines Versorgungsgebiets der Basisstation konfiguriert ist, wobei die VDC-Ressourcenparameterinformationen VDC-Ressourcenbandbreite, VDC-Ressourcenkanalteilung und einen Kanalparameter umfassen.

13. Basisstation nach Anspruch 11, wobei die VDC-Ressourcenanforderungsnachricht die Fahrinformationen des Benutzergeräts umfasst, und die Fahrinformationen Fahrzeuggeschwindigkeitsinformationen eines Fahrzeugs umfassen, auf dem sich das Benutzergerät befindet; und
die erste Zuweisungseinheit insbesondere konfiguriert ist, um: einen VDC-Ressourcenbereich gemäß einem Fahrzeuggeschwindigkeitsintervall der Fahrzeuggeschwindigkeitsinformationen des Fahrzeugs, auf dem sich das Benutzergerät befindet, zu bestimmen, und die aktuell verfügbare VDC-Ressource in dem bestimmten VDC-Ressourcenbereich dem Benutzergerät zuzuweisen, wobei eine Übereinstimmung zwischen dem Fahrzeuggeschwindigkeitsintervall und dem VDC-Ressourcenbereich besteht.

14. Computerlesbares Speichermedium umfassend Anweisungen die, wenn sie von einem Computer ausgeführt werden, den Computer veranlassen, das Verfahren nach einem der Ansprüche 1 bis 7 durchzuführen.

## Revendications

1. Procédé de requête de ressources de communication directe de véhicule, VDC, comprenant :
l'envoi (405), par un équipement utilisateur, d'un message de requête de ressources VDC à une station de base lorsque l'équipement utilisateur a besoin de demander une ressource VDC pour envoyer des informations de service de véhicule, dans lequel le message de requête de ressources VDC comprend au moins un élément parmi les informations suivantes : une liste sur l'état des ressources VDC ou des informations sur le déplacement de l'équipement utilisateur, et une ressource VDC disponible est indiquée dans la liste sur l'état des ressources VDC ;
la réception (406), par l'équipement utilisateur, d'un message d'indication d'attribution de ressources VDC à partir de la station de base, dans lequel le message d'indication d'attribution de ressources VDC indique une ressource VDC attribuée à l'équipement utilisateur par la station de base en fonction du message de requête de ressources VDC ; et
l'envoi (407), par l'équipement utilisateur, des informations de service de véhicule à l'aide de la ressource VDC indiquée par le message d'indication d'attribution de ressources VDC ;
**caractérisé en ce qu'**avant l'envoi (405), par l'équipement utilisateur, du message de requête de ressources VDC à la station de base, le procédé comprend :
l'envoi (403), par l'équipement utilisateur, d'une séquence de préambules d'accès prédéterminée à la station de base, de sorte que la station de base apprenne, en fonction de la séquence de préambules d'accès prédéterminée, que l'équipement utilisateur a besoin actuellement de solliciter la ressource VDC, et attribue une valeur d'autorisation de liaison montante à l'équipement utilisateur à utiliser pour demander la ressource VDC ; et
la réception (404) d'un message d'accusé de réception d'accès à partir de la station de base, dans lequel le message d'accusé de réception d'accès comprend la valeur d'autorisation de liaison montante attribuée à l'équipement utilisateur par la station de base ; dans lequel
l'envoi (405), par l'équipement utilisateur, du message de requête de ressources VDC à la station de base comprend :
l'envoi, par l'équipement utilisateur, du message de requête de ressources VDC à la station de base en fonction de la valeur d'autorisation de liaison montante dans le message d'accusé de réception d'accès.

2. Procédé selon la revendication 1, dans lequel le message de requête de ressources VDC comprend la liste sur l'état des ressources VDC ; et
le procédé comprend en outre :
la surveillance, par l'équipement utilisateur, d'un état d'utilisation de ressources VDC ; et
la mise à jour, par l'équipement utilisateur, d'une liste sur l'état des ressources VDC stockée localement lors de la détection d'un changement de l'état d'utilisation des ressources VDC.

3. Procédé selon la revendication 2, dans lequel la surveillance, par l'équipement utilisateur, de l'état d'utilisation des ressources VDC comprend :
l'obtention d'informations de paramètres de ressources VDC qui sont diffusées par la station de base, dans lequel les informations de paramètres de ressources VDC comprennent une bande passante de ressources VDC, une division de canal de ressources VDC et un paramètre de canal ; et
la surveillance de l'état d'utilisation des ressources VDC en fonction des informations de paramètres des ressources VDC obtenues.

4. Procédé de requête de ressources de communication directe de véhicule, VDC, comprenant :
la réception (606), par une station de base, d'un message de requête de ressources VDC à partir d'un équipement utilisateur, dans lequel le message de requête de ressources VDC comprend au moins un élément parmi les informations suivantes :
une liste sur l'état des ressources VDC ou des informations sur le déplacement de l'équipement utilisateur, et une ressource VDC disponible est indiquée dans la liste sur l'état des ressources VDC ;
l'attribution (607), par la station de base, d'une ressource VDC disponible actuellement à l'équipement utilisateur en fonction du message de requête de ressources VDC de l'équipement utilisateur ; et
l'envoi (608), par la station de base, d'un message d'indication d'attribution de ressources VDC à l'équipement utilisateur, dans lequel le message d'indication d'attribution de ressources VDC indique la ressource VDC attribuée à l'équipement utilisateur par la station de base, de sorte que l'équipement utilisateur envoie des informations de service du véhicule à l'aide de la ressource VDC indiquée par le message d'indication d'attribution de ressources VDC ;
**caractérisé en ce qu'**avant la réception (606) du message de requête de ressources VDC à partir de l'équipement utilisateur, le procédé comprend :
la réception (602), par la station de base, d'une séquence de préambules d'accès de l'équipement utilisateur ;
l'attribution (603), par la station de base, d'une valeur d'autorisation de liaison montante à l'équipement utilisateur à utiliser pour demander la ressource VDC lorsqu'on détermine que la séquence de préambules d'accès est une séquence de préambules d'accès prédéterminée ;
l'envoi (605), par la station de base, d'un message d'accusé de réception d'accès à l'équipement utilisateur, où le message d'accusé de réception d'accès comprend la valeur d'autorisation de liaison montante attribuée à l'équipement utilisateur par la station de base ; et
l'envoi, par l'équipement utilisateur, du message de requête de ressources VDC à la station de base en fonction de la valeur d'autorisation de liaison montante dans le message d'accusé de réception d'accès.

5. Procédé selon la revendication 4, dans lequel le message de requête de ressources VDC comprend la liste sur l'état des ressources VDC ; et
avant la réception du message de requête de ressources VDC à partir de l'équipement utilisateur, le procédé comprend en outre :
la diffusion, par la station de base, d'informations de paramètres de ressources VDC à l'équipement utilisateur dans une zone de couverture de la station de base, dans lequel les informations de paramètres de ressources VDC comprennent une bande passante de ressources VDC, une division de canal de ressources VDC et un paramètre de canal.

6. Procédé selon la revendication 4, dans lequel le message de requête de ressources VDC comprend les informations sur le déplacement de l'équipement utilisateur, et les informations sur le déplacement comprennent des informations de vitesse de véhicule d'un véhicule sur lequel l'équipement utilisateur est situé ; et
l'attribution de la ressource VDC actuellement disponible à l'équipement utilisateur en fonction du message de requête de ressources VDC de l'équipement utilisateur comprend :
la détermination, par la station de base, d'une plage de ressources VDC en fonction d'un intervalle de vitesse de véhicule des informations de vitesse de véhicule du véhicule sur lequel l'équipement utilisateur est situé, dans lequel il existe une correspondance entre l'intervalle de vitesse de véhicule et la plage de ressources VDC ; et
l'attribution, par la station de base, de la ressource VDC actuellement disponible dans la plage de ressources VDC déterminée à l'équipement utilisateur.

7. Procédé selon l'une quelconque des revendications 4 à 6, dans lequel le procédé comprend en outre :
la réception, par la station de base, d'informations d'indications d'occupation de ressources VDC à partir d'une station de base voisine, dans lequel les informations d'indications d'occupation de ressources VDC de la station de base voisine sont utilisées pour indiquer une ressource VDC occupée au sein d'une zone de couverture de la station de base voisine ; et
l'attribution de la ressource VDC actuellement disponible à l'équipement utilisateur en fonction du message de requête de ressources VDC de l'équipement utilisateur comprend :
l'attribution, par la station de base, de la ressource VDC actuellement disponible à l'équipement utilisateur en fonction du message de requête de ressources VDC de l'équipement utilisateur et des informations d'indications d'occupation de ressources VDC de la station de base voisine.

8. Équipement utilisateur (700), comprenant :
une unité d'envoi (701), configurée pour envoyer un message de requête de ressources de communication directe de véhicule, VDC, à une station de base lorsque l'équipement utilisateur a besoin de demander une ressource VDC pour envoyer des informations de service de véhicule, dans lequel le message de requête de ressources VDC comprend au moins un élément parmi les informations suivantes : une liste sur l'état des ressources VDC ou des informations sur le déplacement de l'équipement utilisateur, et une ressource VDC disponible est indiquée dans la liste sur l'état des ressources VDC ; et
une unité de réception (702), configurée pour recevoir un message d'indication d'attribution de ressources VDC à partir de la station de base, dans lequel le message d'indication d'attribution de ressources VDC indique une ressource VDC attribuée à l'équipement utilisateur par la station de base en fonction du message de requête de ressources VDC ; dans lequel
l'unité d'envoi (701) est configurée en outre pour envoyer les informations de service de véhicule à l'aide de la ressource VDC indiquée par le message d'indication d'attribution de ressources VDC ;
**caractérisé en ce que** :
l'unité d'envoi (701) est configurée en outre pour envoyer une séquence de préambules d'accès prédéterminée à la station de base avant l'envoi du message de requête de ressources VDC à la station de base, de sorte que la station de base apprenne, en fonction de la séquence de préambules d'accès prédéterminée, que l'équipement utilisateur a besoin actuellement de solliciter la ressource VDC, et attribue une valeur d'autorisation de liaison montante à l'équipement utilisateur à utiliser pour demander la ressource VDC ; et
l'unité de réception (702) est configurée en outre pour recevoir un message d'accusé de réception d'accès à partir de la station de base, et le message d'accusé de réception d'accès comprend la valeur d'autorisation de liaison montante attribuée à l'équipement utilisateur par la station de base ; et
dans lequel l'unité d'envoi (701) est configurée pour envoyer le message de requête de ressources VDC à la station de base en fonction de la valeur d'autorisation de liaison montante dans le message d'accusé de réception d'accès.

9. Équipement utilisateur selon la revendication 8, dans lequel le message de requête de ressources VDC comprend la liste sur l'état des ressources VDC ; et
l'équipement utilisateur comprend en outre :
une unité de surveillance (703), configurée pour surveiller un état d'utilisation de ressources VDC de communication directe de véhicule ; et
une unité de mise à jour (704), configurée pour mettre à jour une liste sur l'état des ressources VDC stockées localement lorsque l'unité de surveillance surveille un changement de l'état d'utilisation de ressources VDC.

10. Équipement utilisateur selon la revendication 9, dans lequel l'unité de surveillance comprend :
une unité d'obtention, configurée pour obtenir des informations de paramètres de ressources VDC qui sont diffusées par la station de base, dans lequel les informations de paramètres de ressources VDC comprennent une bande passante de ressources VDC, une division de canal de ressources VDC et un paramètre de canal ; et
une sous-unité de surveillance, configurée pour surveiller l'état d'utilisation des ressources VDC en fonction des informations de paramètres de ressources VDC obtenues par l'unité d'obtention.

11. Station de base (1000), comprenant :
une première unité de réception (1001), configurée pour recevoir un message de requête de ressources de communication directe de véhicule, VDC, à partir d'un équipement utilisateur, dans laquelle le message de requête de ressources VDC comprend au moins un élément parmi les informations suivantes : une liste sur l'état des ressources VDC ou des informations sur le déplacement de l'équipement utilisateur, et une ressource VDC disponible est indiquée dans la liste sur l'état des ressources VDC ;
une première unité d'attribution (1002), configurée pour attribuer une ressource VDC actuellement disponible à l'équipement utilisateur en fonction du message de requête de ressources VDC de l'équipement utilisateur reçu par la première unité de réception ; et
une première unité d'envoi (1003), configurée pour envoyer un message d'indication d'attribution de ressources VDC à l'équipement utilisateur, dans laquelle le message d'indication d'attribution de ressources VDC indique la ressource VDC attribuée à l'équipement utilisateur par la première unité d'attribution, de sorte que l'équipement utilisateur envoie des informations de service de véhicule à l'aide de la ressource VDC indiquée par le message d'indication d'attribution de ressources VDC ;
**caractérisé en ce que** la station de base comprend en outre :
une troisième unité de réception, configurée pour recevoir une séquence de préambules d'accès de l'équipement utilisateur ;
une seconde unité d'attribution, configurée pour attribuer une valeur d'autorisation de liaison montante à l'équipement utilisateur à utiliser pour demander la ressource VDC lorsqu'on détermine que la séquence de préambules d'accès est une séquence de préambules d'accès prédéterminée ; et
une seconde unité d'envoi, configurée pour envoyer un message d'accusé de réception d'accès à l'équipement utilisateur, où le message d'accusé de réception d'accès comprend la valeur d'autorisation de liaison montante attribuée à l'équipement utilisateur par la station de base ;
dans laquelle le message de requête de ressources VDC est envoyé par l'équipement utilisateur à la station de base en fonction de la valeur d'autorisation de liaison montante dans le message d'accusé de réception d'accès.

12. Station de base selon la revendication 11, dans laquelle le message de requête de ressources VDC comprend la liste sur l'état des ressources VDC ; et
la station de base comprend en outre :
une unité de diffusion, configurée pour diffuser des informations de paramètres de ressources VDC à l'équipement utilisateur dans une zone de couverture de la station de base, dans laquelle les informations de paramètres de ressources VDC comprennent une bande passante de ressources VDC, une division de canal de ressources VDC et un paramètre de canal.

13. Station de base selon la revendication 11, dans laquelle le message de requête de ressources VDC comprend les informations sur le déplacement de l'équipement utilisateur, et les informations sur le déplacement comprennent des informations de vitesse de véhicule d'un véhicule sur lequel l'équipement utilisateur est situé ; et
la première unité d'attribution est conçue spécifiquement pour : déterminer une plage de ressources VDC en fonction d'un intervalle de vitesse de véhicule des informations de vitesse de véhicule du véhicule sur lequel l'équipement utilisateur est situé, et attribuer la ressource VDC disponible actuellement dans la plage de ressources VDC déterminée à l'équipement utilisateur, dans laquelle il existe une correspondance entre l'intervalle de vitesse de véhicule et la plage de ressources VDC.

14. Support de stockage lisible par ordinateur comprenant des instructions qui, lorsqu'elles sont exécutées par un ordinateur, amènent l'ordinateur à mettre en oeuvre le procédé selon l'une quelconque des revendications 1 à 7.
